# EUROPEAN PATENT APPLICATION

(11) **EP 2 600 324 A2**
(43) Date of publication of application: **05.06.2013**
(21) Application number: 12195177.6
(22) Date of filing: 26.01.2007
(51) Int. Cl.: G07F 7/08, G06Q 10/00, G06K 1/12, G06K 17/00, G06K 19/14, G07G 1/14

(54) **Printing method**

(30) Priority: 27.01.2006 GB 0601700; 19.05.2006 GB 0610008; 19.05.2006 US 747679 P
(62) Divisional of application: 07705033.4
(71) Applicant: Videojet Technologies, Inc., Wood Dale, IL 60191 (US)
(72) Inventor: Lawlor, Paul, Nottingham, Nottinghamshire NG9 5EQ (GB); Spencer, Steven David, South Normanton, Derbyshire DE55 3NB (GB); Fowkes, Mark Robert, Nottingham, Nottinghamshire NG7 1GW (GB); Butcher, James Christopher, Nottingham, Nottinghamshire NG13 0DS (GB)
(74) Representative: Kenrick, Mark Lloyd

(57) **Abstract**

Apparatus for printing a security code, the apparatus comprising: means for generating a first component of said security code by encryption; means for generating a second component of said security code using a value of a machine generated code; and means for printing said security code by printing said first and second components.

The apparatus is configured to associate a common first component with a plurality of distinct second components to print a plurality of security codes.

## Description

The present invention relates to methods and apparatus for generating a data item for inclusion in a printed image and also to methods for verifying such data. More particularly, but not exclusively, the invention relates to methods and apparatus for generating security codes for inclusion in a printed image and verifying such security codes. Aspects of the invention also relate to methods and apparatus for validating data stored in a database, and methods and apparatus for generating an image template.

It is known that the production and distribution of counterfeit goods is an enormous problem which affects a wide range of goods.

Heretofore, various methods for the detection of counterfeit goods have been proposed. In general terms, some of these methods involve the inclusion of a security code on items or on packaging associated with such items. Such security codes typically take the form of an alphanumeric string. In order to determine whether a particular item is a genuine item or a counterfeit item, a consumer or brand owner or retailer enters the security code into a verification system (for example via the Internet). The verification system uses algorithms to process the input security code and also uses certain information stored in a database, in order to determine whether the input security code is valid and therefore whether the item to which it is applied is a genuine item. The consumer or brand owner or retailer is then informed appropriately.

WO00/23954 (Elliott) describes a verification method of the general type described above. In the verification method of Elliott a security code is generated by encrypting both public data applied to an item (e.g. a batch number) and private data known both to the generator of the security code and to a verifier. In order to carry out versification, a user inputs a security code into a verification system together with predetermined public data (e.g. the batch number) appearing on the goods. The verification system then encrypts the input public data together with the stored private data to generate a verification code which is compared with the security code to determine whether the processed item is a genuine or counterfeit item.

It is described in WO00/23954 that it is advantageous that a unique security code is applied to each item, given that the use of unique security codes improves the robustness of the counterfeit detection method.

However, a problem occurs if unique data is to be applied to each of a plurality of items being passed along a production line. Specifically, printers (sometimes referred to as coders) which operate on such production lines are often required to operate at high speeds. Each particular make and model of printer has a finite maximum throughput speed at which it can print the required information for a given application. However, these throughput speeds are often considerably reduced if new data needs to be received for each item onto which that data is to be printed. This speed reduction is because the printer system has to perform communication and image re-rendering operations in addition to printing operations. As a result a given printer might no longer be fast enough to print unique security codes onto every particular item.

Additionally, some prior art methods of applying and verifying security codes are deficient in terms of both speed, scalability, and security. Specifically it is desirable that security code verification is carried out as quickly as possible, however this is very difficult with some methods described in the prior art. Additionally, some prior art methods would benefit from improving security, both in terms of data transmission and storage.

It is an object of the present invention to obviate or mitigate at least some of the problems outlined above.

According to a first aspect of the present invention, there is provided a method and apparatus for printing a data item. The method comprises receiving at a printer a first component of said data item from an external data source; generating a second component of said data item at said printer; and printing said data item by printing said first and second components.

The invention is particularly applicable in the printing of security codes. Such security codes can be applied to goods and/or their packaging. When so applied, such security codes can be used by a consumer, a brand owner or an enforcement official to determine whether goods to which the security code is applied are authentic or counterfeit. Such security codes also have a variety of other uses. For example, such security codes can be used to track grey-imports, thereby addressing issues relating to cross-border trading. Such security codes can also allow so-called "track-and-trace" operations to be carried out. Such security codes can also be used to uniquely identify an item in a group of items. That is, such security codes can be used to identify a specific instance of a product.

The term "printer" is used herein to indicate any device configured to cause data to appear on an object, such as for example by marking the object. The term therefore includes conventional printing devices such as thermal transfer, laser and ink jet printers as well as other marking devices such as etching devices. The term also includes systems in which a substrate is irradiated to cause data to appear on the substrate. For example, a low powered laser light may be directed onto the substrate to cause the substrate to change state, the change of state being visible in the form of a different colour. The substrate may be treated so as to cause sensitivity to irradiation. The term "printing" is used to indicate the any operation which causes data to appear on an object.

Generating said second component may comprise reading a value of a machine generated code such as a counter value or a clock value held by said printer.

The method may further comprise receiving a plurality of first components at said printer; and generating a plurality of second components at said printer; wherein second components are generated more frequently than said first components are received. In this way, where the speed at which first components can be received is restricted, the use of first and second components in this way allows unique data items to be generated more quickly than would be possible if unique first components were provided for each data item.

The first component may be generated by encrypting first data to generate second data, said first component comprising said second data.

The second component may be printed as a suffix or a prefix to said first component. Alternatively, the first component may comprises a plurality of characters, and printing said data item may comprise printing said second component between two adjacent characters of said first component.

A common first component may be associated with a plurality of distinct second components to print a plurality of data items. Each of said plurality of data items may be unique.

Each of the data items may be provided to a data repository. Data may be stored indicating second components associated with a particular first component. Data may be stored indicating second components associated with first data used to generate a particular first component.

Storing data indicating second components associated with first data used to generate a particular first component may comprise reading a value of said machine generated code when each first component is provided to said printer; and generating data indicating a range of values of said second component associated with each first component based upon said value of said machine generated code. The machine generated code may be reset after said reading.

A first value of said machine generated code may be read and reset before a first first component is provided to said printer; and a second value of said machine generated code may be read and reset before a second first component is provided to said printer. Values of said machine generated code associated with first data used to generate said first first component may be determined by said second value.

The values of said machine generated code associated with first data used to generate said first first component may be a range of values between zero and said second value.

Storing data indicating second components associated with first data used to generate a first value of said first component may comprise:
(a) reading a first value of said machine generated code;
(b) transmitting said first value of said first component to said printer;
(c) transmitting a second value of said first component to said printer;
(d) reading a second value of said machine generated code;
(e) associating values of said machine generated code determined by said first value of said machine generated code and said second value of said machine generated code with said first value of said first component.

In some embodiments, step (c) further comprises reading a third value of said machine generated code from said printer before transmitting said second value of said first component. The method may further comprise:
(f) transmitting a third value of said first component to said printer;
(g) reading a fourth value of said machine generated code from said printer; and
(h) associating values of said second component determined by said third value of said second component and said fourth value of said second component with said second value of said first component.

The values of said second component associated with said first value of said first component may be a range of values bounded by said first and second values of said second component. Values of said second component associated with said second value of said first component may be a range of values bounded by said third and fourth values of said second component. The method may further comprise subtracting said first value of said second component from said second value of said second component to determine a first number of values.

A data item for each of a plurality of counter values may be stored, and the method may further comprise incrementing a data item associated with said first number when said first number of values is determined, and incrementing one or more data item associated with values less than said first number.

Values of said second component associated with said first component may be a range of values determined by said first value of said first component and said first number of values. The method may further comprise subtracting said third value of said second component from said fourth value of said second component to determine a second number of values. The method may comprise storing a maximum of said first and second number of values.

Step (b) of the method set out above may further comprise generating said first value of said first component, said first value of said first component being generated using said first value of said second component. A delay may be applied between steps (c) and (d) of the method set out above. Step (b) of the method set out above may further comprise communicating with said printer to determine when said second value of said first component should be transmitted to said printer.

The external data source may be connected to said data repository, and said external data source may provide data to said data repository. The external data source may provide details of first data used to generate each first component and each associated second component to said data repository. The external data source may provide details of each first component and each associated second component to said data repository. Data may be provided to the data repository over a local area network and/or over the Internet.

A further aspect of the invention provides a method for marking an object with a data item, the method comprising receiving at a marking device a first component of said data item from an external data source; generating a second component of said data item at said marking device; and printing said data item by marking said object with said first and second components.

The invention further provides a method for providing data to a printer configured to print a data item, the method comprising transmitting to a printer a first component of said data item, said printer being configured to generate a second component of said data item and to print said data item by printing said first and second components.

The invention also provides a method and apparatus for printing a data item, the method comprises generating a first component of said data item at a printer; generating a second component of said data item at said printer using a value of a machine generated code; and printing said data item by printing said first and second components. The method may further comprise generating a plurality of first components at said printer, and generating a plurality of second components at said printer. Second components may be generated more frequently than said first components are generated.

The machine generated code may be a counter value or a clock value held by said printer. The data item may be a security code.

The invention also provides a method apparatus for generating a security code comprising first and second components. The method comprises:
(a) reading a first value of a second component of said security code from a second memory;
(b) transmitting a first value of a first component of said security code to a first memory;
(c) transmitting a second value of a first component of said security code to said first memory;
(d) reading a second value of said second component from said second memory; and
(e) associating values of said second component determined by said first value of said second component and said second value of said second component with said first value of said first component.

The invention therefore provides an asynchronous way of synchronising first and second components of a security code.

Step (c) may further comprise:
reading a third value of said second component from said second memory before transmitting said second value of said first component;
and wherein the method further comprises:
   (f) transmitting a third value of said first component to said first memory;
   (g) reading a fourth value of said second component from said second memory; and
   (h) associating values of said second component determined by said third value of said second component and said fourth value of said second component with said second value of said second first component.

Reading values of said second component from said second memory may comprise reading data from said second memory and deriving said values of said second component from said data. In this way, the second component values need not be based exactly upon data stored in said second memory, but can instead be derived from data stored in said second memory.

The first and second memories may provided by a printing device. The reading and transmitting may be carried out from a device external to said printing device.

Alternatively, said reading and said transmitting are carried out internally within said printing device. In such a case, the method set out above may be carried out entirely within the printing device.

According to a further aspect of the present invention, there is provided a method and apparatus for generating a security code comprising first and second components, wherein a particular first component is to be associated with a plurality of values of said second component. The method comprises receiving a first value of said second component, and encrypting said value of said second component to generate a value for said first component.

The second component may be a counter component. The first value of said second component may be an initial counter value associated with said generated first component.

According to an aspect of the present invention, there is further provided a method and apparatus for verifying a security code, said security code comprising a counter component. The method comprises identifying a data item associated with a value of said counter component, said data item representing a number of generated security codes having said value of said counter component and validating said data item. If said validation is successful data is generated representing successful validation and said data item is modified. If said validation is unsuccessful data is generated representing unsuccessful validation.

There is also provided a method and apparatus for generating a database for use in verifying security codes. Each security code comprising a first component and a second component, the second component being a counter component. The method comprises denning respective data items for at least some values of said counter component; generating a plurality of security codes having common first components and differing counter components; and updating data items based upon values of said counter component.

A further aspect of the invention provides a method and apparatus for verifying a security code. The method comprises processing said security code to generate a first component and a second component and verifying said first and second components independently of one another.

The present invention also provides a method and apparatus for decrypting a security code associated with a product, the method comprises: receiving as input a first data item and said security code; retrieving decryption means associated with said first data item; and decrypting at least part of said security code using said retrieved decryption means to generate decrypted data. The first data item may be associated with the product, and more particularly may be associated with a batch with which the product is associated.

By storing decryption means together with data associated with a particular batch, the inventors have surprisingly realised that a good balance between security and storage requirements is achieved. Specifically, if different decryption means are stored for each product, very large data storage requirements arise. If, on the contrary, only a single decryption means is used to decrypt all security codes, security is compromised. Therefore, by storing decryption means on a batch basis an effective compromise is achieved.

The decryption means may comprise a decryption key, or alternatively may comprise one or more decryption rules.

The method may further comprise verifying said decrypted data using stored data; and generating data indicating the result of said verifying.

The security code and the first data item may be associated with an article. This association can take a variety of forms. For example, the security code and said first data item may be encoded on the article itself or its packaging. Such encoding may involve printing the security code and the first data item on the article or its packaging in human readable form. Alternatively, the security code and first data item may be provided on the article or its packaging in machine readable form. Suitable machine readable forms include barcodes and RFID tags.

Verifying said decrypted data may comprise comparing at least part of said decrypted data with a second data item associated with said first data item and said decryption means. The first data item, the second data item and said decryption means may be stored in a database. The database may store a plurality of first data items, each first data item being associated with a respective decryption means and a respective second data item.

The security code may be generated by encrypting initial data using encryption means.

The encryption means and decryption means may be equal or different. For example, in embodiments in which the encryption and decryption means are keys, the keys may be equal or may alternatively be different and form a pair such application of a first key of the pair converts initial data into encrypted data and application of a second key of the pair to the encrypted data generates the initial data.

The invention also provides a method of verifying a security code comprising transmitting said security code and a first data item to a server, the server being configured to receive as input the first data item and said security code, to retrieve decryption means associated with said first data item, to decrypt at least part of said security code using said retrieved decryption key to generate decrypted data and to verify said decrypted data using stored data. The method also comprises receiving data from said server indicating a result of said verification and displaying data to a user indicating said result of said verification.

The invention also provides a method of verifying a security code. The method comprises:
transmitting a first data item and said security code from a client to a server;
receiving said first data item and said security code at said server from said client;
retrieving decryption means associated with said first data item at said server;
decrypting at least part of said security code using said retrieved decryption means to generate decrypted data at said server;
verifying said decrypted data using stored data at said server;
generating data indicating the result of said verification at said server;
transmitting data indicating the result of said verification to said client from said server;
receiving data indicating the result of said verification at said client; and
displaying data indicating the result of said verification at said client.

An aspect of the invention also provides a method and apparatus for generating security codes. The method comprises encrypting initial data using encryption means to generate a security code; associating decryption means with a first data item, said decryption means being usable to decrypt at least part of said security code to generate said initial data; and storing said decryption me in association with said first data item.

According to the invention there is also provided a method and apparatus for validating data stored in a database, said data being associated with a plurality of operations carried out by a predetermined system. The method comprises obtaining data from said predetermined system representing a number of operations carried out; obtaining data from said database representing a number of operations carried out; determining whether said data obtained from said predetermined system and said data obtained from said database satisfy a predetermined relationship.

The invention also provides a method of generating an image template defining a layout of print data, the image template including a first field associated with a security code, and a second field associated with a first data item, the second field being adapted to receive data to populate said second field with data to be printed in a printed image based upon said image template. The method comprises generating data stored in said image template representing an association between said first field and said second field.

A further aspect of the invention provides a method for configuring a database used to verify security codes applied to products wherein the database stores data associated with said security codes for use in verification operations, the method comprising:
receiving a plurality of data sets, each data set comprising data associated with security codes applied to a respective batch of products;
storing each of said plurality of data sets in said database;
providing details identifying at least some of said batches;
receiving input data in response to said providing, said input data indicating whether verification operations for particular batches are to be enabled;
storing data in said database based upon said input data.

The invention also provides a method of controlling access to a database from a plurality of devices. The method comprises storing data identifying said plurality of devices; providing said data to a user; and receiving user input indicating whether data transmitted to said database by a specified device is to be allowed.

A further aspect of the invention provides a method for printing a plurality of data items, each data item comprising first and second components, the method comprising: transmitting a plurality of first components to said printer; and transmitting a plurality of second components to said printer. The printer is configured to print data items by printing respective first and second components, and wherein second components are transmitted more frequently than said second components.

Various aspects of the invention are set out above. It will be understood that all aspects of the invention can be implemented as methods, apparatus, and systems. Additionally, suitable computer programs to implement aspects of the invention can be provided. Accordingly, aspects of the invention provide data carriers carrying such programs. Such data carriers include tangible carriers as well as communications lines.

Features described in relation to one aspect of the invention can be suitably applied to other aspects of the present invention.

Embodiments of the present invention will now be described, by way of example, with reference to the accompanying drawings, in which:
Figure 1 is a schematic illustration of a computer network used in embodiments of the present invention;
Figures 1A to 1D are schematic illustrations of printers suitable for use in the computer network of Figure 1;
Figure 2 is a flowchart showing an overview of possessing carried out in embodiments of the present invention using the computer network of Figure 1;
Figure 3 is a flowchart showing part of the processing of Figure 2 in further detail;
Figure 4 is a schematic illustration showing one of the printers of Figure 1 and its associated pod in further detail;
Figure 5 is a schematic illustration of a security code applied to products in an embodiment of the present invention;
Figure 6 is an image applied to a product in an embodiment of the present invention;
Figure 7 is a sequence diagram showing the communication between the pod and printer of Figure 4;
Figure 8 is a schematic illustration of a database used in embodiments of the present invention;
Figure 8A is a schematic illustration of an alternative implementation of a table of the database of Figure 8;
Figures 9 and 10 are schematic illustrations of data stored at the pod in Figure 4;
Figure 11 is a flowchart showing communication between the pod and database of Figure 8;
Figure 11A is a flowchart showing an auditing process carried out in the process of Figure 11;
Figure 12 is an image applied to a product to be verified in an embodiment of the present invention;
Figure 13 is a flowchart showing a verification operation carried out using the computer network of Figure 1;
Figures 14, 15 and 16 are webpages showing verification results presented to a user;
Figure 17 is a schematic illustration of decryption of a security code to generate private data;
Figure 18 is a flowchart showing part of the process of Figure 13 in further detail;
Figure 19 is a schematic illustration showing communication between the verification server and the Internet in Figure 1;
Figure 20 is a schematic illustration showing mappings between URLs and the secure database of Figure 1;
Figure 21 is a screenshot showing a webpage useable to enable stored data for verification;
Figure 22 is a screenshot showing a webpage useable to enable or disable stored data for verification;
Figure 23 is a screenshot showing a webpage providing data pertinent to verification attempt;
Figure 24 is a screenshot of a webpage used to configure various pods;
Figure 25 is a schematic illustration showing communications involving a pod shown in Figure 1;
Figure 26 is a schematic illustration of an alternative embodiment of a pod shown in Figure 25;
Figure 27 a schematic illustration of an alternative embodiment of a pod shown in Figure 25;
Figure 28 is a schematic illustration of operation of a user interface provided by the pod of Figure 25;
Figures 29 to 39 are schematic illustrations of graphical user interfaces provided by the pod; and
Figure 40 is a screenshot of a graphical user interface usable to generate an image template.

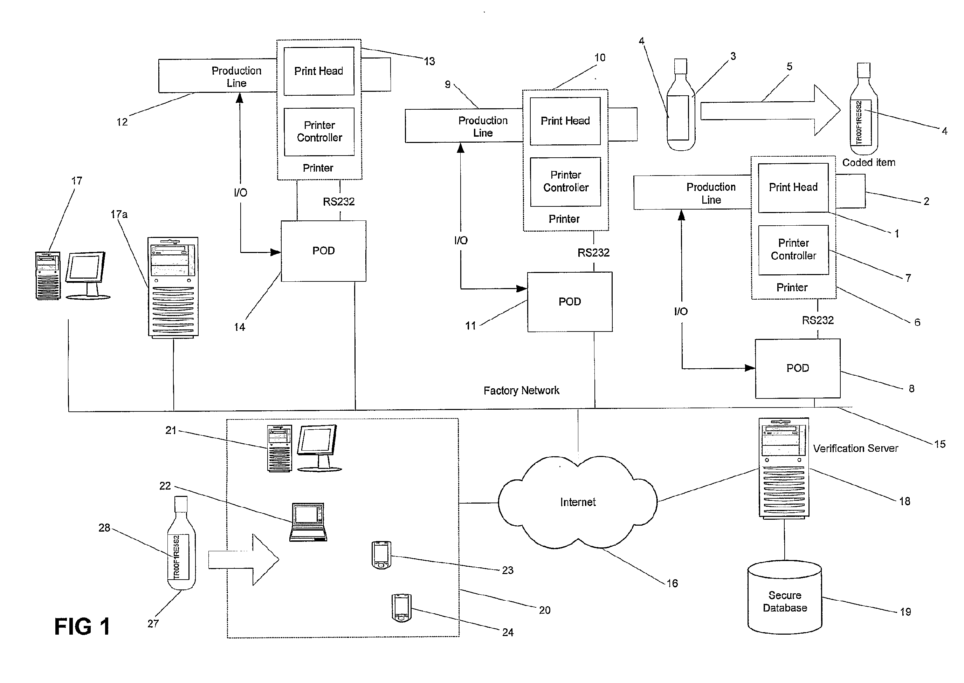

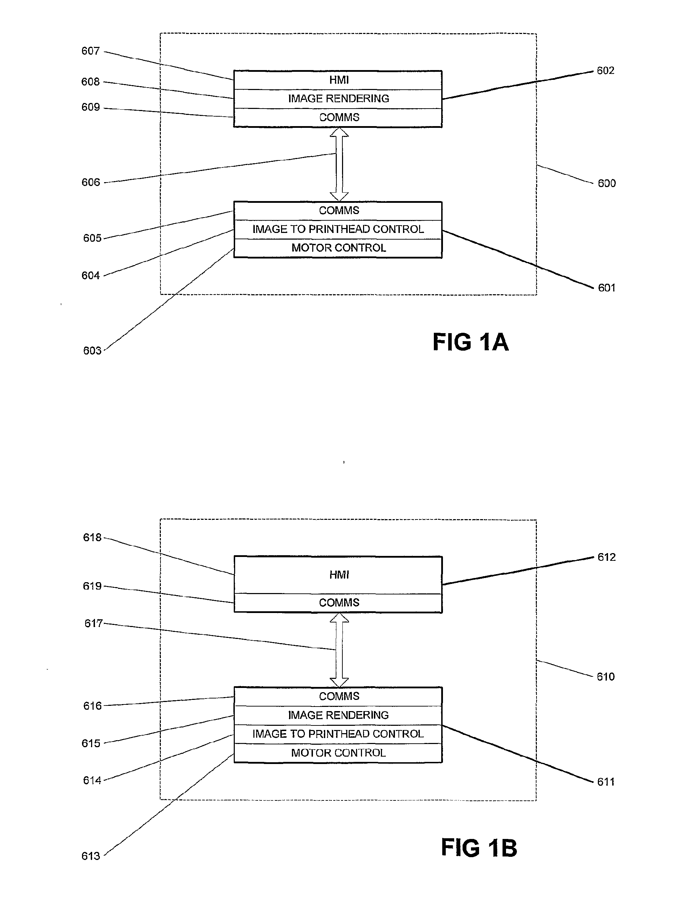

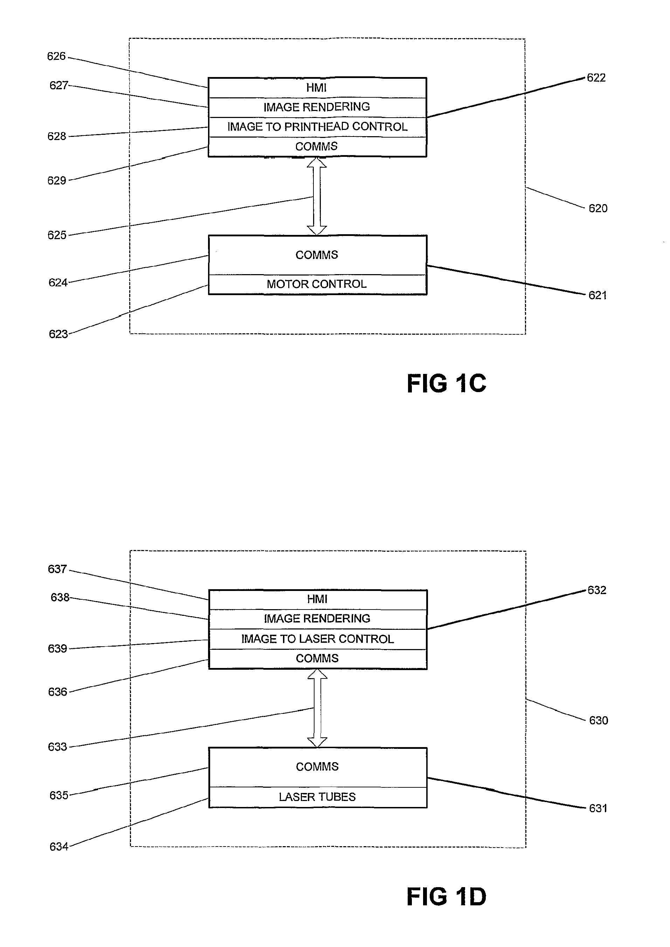

Referring to Figure 1, a computer network configured to print data onto items passing along a production line is shown. It can be seen that a printhead 1 is configured to print data onto items passing along a production line 2. It is shown in Figure 1 that a bottle 3 initially has a blank label 4. After a printing operation denoted by an arrow 5 and carried out by the printhead 1, the label 4 has textual information printed upon it. It will be appreciated that in alternative embodiments of the invention, the textual information may be printed directly onto the bottle 3 rather than onto a label affixed to the bottle 3.

The printhead 1 is provided by a printer 6 which further comprises a printer controller 7. The printer controller 7 is responsible for providing data to the printhead 1 to be printed onto items passing along the production line 2. Such items typically include consumer goods such as drinks bottles or cans, labels on jars, pharmaceutical blisters, or cartons. It can be seen that the printer 6 is in communication with a pod 8, the pod 8 being operable to provide data to the printer 6 which is processed by the printer controller 7. The pod 8 is also configured to control operation of the printer 6, as is described in further detail below. It can be seen that communication between the printer 6 and the pod 8 comprises RS232 serial communication It will be appreciated that other forms of communication between the printer 6 and the pod 8 could similarly be used. The pod 8 is also in communication with a controller associated with the production line 2. This enables the pod 8 to control movement of products along the production line 2.

In preferred embodiments of the present invention, the printhead 1 is an inkjet printhead of a type well known in the art. In alternative embodiments of the present invention, other types of printhead may be used. In particular, in some embodiments of the invention the printhead 1 is a laser marking "printhead" of a type well known in the art. Indeed, it will be appreciated that references to "printing" and "printheads" in this document are intended broadly to refer to any means for marking information on to a product. Accordingly, while well known printers such as inkjet printers, thermal transfer printers and laser printers are all within the scope of the term "printer" so are other marking methods such as, for example, etching.

One configuration for the printer 6 has been described above. The Figures 1A to 1D show various printer configuration which can suitably be used in embodiments of the present invention. Figure 1A shows a printer 600. The printer 600 is made up of two physical units 601, 602. The unit 601 includes a motor control section 603 which includes the mechanical printing assembly and its associated control. Thus, in a thermal transfer printer the motor control section 603 will include motors for driving a web of tape between supply and takeup spools and motive means for moving a printhead so as to cause ink to be transferred from the ribbon onto a substrate to be printed. The unit 601 further includes an image processing section 604 configured to receive image data and issue appropriate signals to the motor control section 603 to cause printing operations to be carried out. The unit 601 also includes communication electronics 605 this allows the unit 601, 602 to communicate over a communications link 606.

The unit 602 includes a man machine interface 607 and an image rendering section 608. Thus, data defining an image to be printed is received by the unit 602 and processed by the image rendering section 608 before being passed to communication electronics 609. This allows appropriate data to be passed to the unit 601.

Figure 1B shows an alternative printer configuration 610. The printer 610 again comprises two physical units 611, 612. Between these two units, the same functionality as that described with reference to Figure 1A is provided. However, here a motor control section 613, an image processing section 614 and an image rendering section 615 are all provided by the unit 611. The unit 611 also has communication electronics 616 allowing communication with a unit 612 over a communications link 617. The unit 612 provides a man machine interface 618 and communication electronics 619 to allow communications over the communications link 617. Thus, from the proceeding description it can be seen that the printer 610 again comprises two physical units 611, 612 although in this case all functionality save for the man machine interface 618 is provided within the unit 611.

An alternative printer 620 is shown in Figure IC. The printer 620 again comprises two physical units 621, 622, which together provide the same functionality as the units 601 and 602 in Figure 1A and the units 611, 612 of Figure 1B.

In the printer 620, the first unit 621 provides a motor control section 623 and communications electronics 624 allowing communication over a communications link 625. The unit 622 provides a man machine interface 626 together with an image rendering section 627 and an image processing section 628. The unit 622 also provides communications electronics 629 allowing communication over the communications link 625.

In each of the printers of Figures 1A, 1B and 1C it will be appreciated that the respective motor control sections 603, 613, 623 can take any convenient form. That is, where the printers print using thermal transfer technology the motor control section takes the form described above. However the printer can suitably be an inkjet printer in which case appropriate inkjet printing hardware is provided.

Figure 1D shows an alternative printer 630. Again, this printer comprises two physical units 631, 632 having a communications link 633 allowing communication there between. The printer 630 is a laser printer and accordingly the unit 631 comprises laser tubes 634 together with appropriate control electronics 635 allowing communication over the communications link 633 with the unit 632. Such communication uses the communication electronics 636 of the unit 632. The unit 632 provides a man machine interface 637, an image rendering section 638 and an image processing section 639 all of the types described above.

Thus, from the description of Figures 1A to 1D it can be seen that printers suitable for use in embodiments of the invention can take any suitable form and be distributed between various physical units. Alternatively, in some embodiments of the invention a printer may take the form of a single physical unit.

Referring back to Figure 1, it can be seen that the schematic illustration further shows a second production line 9 having an associated printer 10 and a pod 11. A third production line 12 having an associated printer 13 and a pod 14 is further provided. It can be seen that the pods 8, 11, 14 are connected to a factory wide network 15. A print data server 17a and a desktop PC 17b are also connected to the factory wide network 15. In general terms, image templates defining properties of images to be printed are prepared using software running on the desktop PC 17b. Image templates created in this way are stored on the print data server 17a. Such image templates can then be provided to the pods 8, 11, 14 over the factory wide network 15.

It can further be seen from Figure 1 that the factory wide network 15 is connected to the Internet 16. This allows data to be transmitted from the pods 8, 11, 14 to other computers outside a factory in which the factory wide network 15 is installed. In particular, it can be seen that a verification server 18 providing a secure database 19 is connected to the Internet 16. Additionally, a variety of computing devices 20 are also shown having access to the Internet 16. It will be appreciated that any suitable computing device can be used to access the Internet 16 in embodiments of the present invention. However, it can be seen that in the illustration of Figure 1 the variety of computing devices 20 include a desktop computer 21, a laptop computer 22, a handheld computer 23, and a mobile telephone 24.

Figure 1 shows that three pods 8,11 and 14, each associated with a respective printer 6, 10, 13, are connected to the factory wide network 15. It will be appreciated that in different embodiments of the invention differing numbers of pods (having associated printers) may be connected to the factory wide network 15. In the following description, embodiments of the invention are described with reference to the pod 8 and the associated printer 6. It will appreciated that operation of the pods 11 and 14 and their associated printers is analogous.

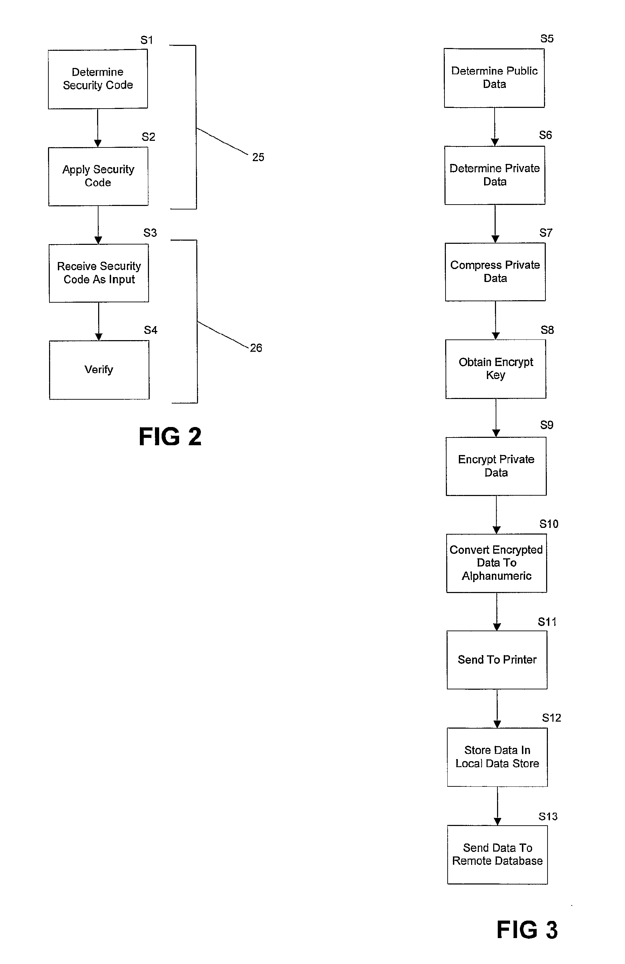

As described above, the production and distribution of counterfeit goods is an enormous problem which affects a wide range of goods in modern society. The network of computers of Figure 1 can be used to apply security codes to such goods, and to verify such codes to determine whether goods are counterfeit. A general process operable on the computer network of Figure 1 is shown in Figure 2. The process of Figure 2 comprises 2 distinct phases: a first phase 25 is concerned with generating and applying a security code while a second phase 26 is concerned with verifying a security code.

The first phase 25 involves determining a security code at step S1, and applying that security code to a product at step S2. In embodiments of the present invention, as will be described below, security codes are generated by the pod 8 and the printer controller 7 working in combination with one another. Security codes generated in this way are applied to products travelling along the production line 2 by the printhead 1. Data required to validate such security codes is provided to the verification server 18 and stored in the secure database 19 for use in subsequent verification operations.

The second phase of Figure 2 involves receiving a security code as input at step S3, and verifying this security code at step S4. Referring again to Figure 1, it can be seen that an item 27 has a security code printed on a label 28. This security code is humanly read from the label, and input into one of the variety of computing devices 20. This results in communication between the relevant computing device and the verification server 18, the communication determining the validity of otherwise of the input security code.

Figure 3 shows the processing of the first phase 25 of Figure 2 in further detail. In the following description references are made to public data and private data. In general terms, public data is data that is readily available to any person having access to an item whose authenticity is to be verified. Public data is typically printed onto the item itself, or onto a label or packaging associated with the item. Alternatively or additionally, public data can be printed onto the packaging of a container of multiple items (e.g. a box containing twelve bottles). In contrast, private data is not obtainable by a person having access to the item, but rather access to such data is controlled so as to be available only to an organisation generating a security code to be applied to an item, and an organisation carrying out verification operations.

In general terms, the processing shown in Figure 3 is carried out by the pod 8. It will however be appreciated that in alternative embodiments of the present invention similar processing could be carried out on a different device or combination of devices, or within hardware and/or software modules within the printer 6 or the printer controller 7 within the printer 6.

Referring now to Figure 3, at step S5 public data to be associated with a generated security code is determined. This public data can take any suitable form, although it is often convenient to use public data in the form of a batch number, given that batch numbers are often printed on packaging for other purposes. The batch number may either be provided to the pod 8 over the factory wide network 15, or alternatively input to the pod 8 via an appropriate user interface, or calculated in a predetermined manner (e.g by use of a Julian Date and TimeStamp)

At step S6, private data to be used is determined. Again, this private data can take any convenient form, but typically takes the form of data known to the pod but very difficult for a third party to determine. Suitable private data includes accurate time information relating to the start of processing for a particular product batch. Other suitable private data includes randomly or pseudo-randomly generated numbers, unique batch identifiers or a combination of such data. It will be appreciated that it would be very difficult for a third party to correctly determine such data.

Having obtained private data at step S6, the private data is compressed at step S7. Having compressed the private data at step S7, an appropriate encryption key is obtained at step S8. The encryption key can be obtained in any suitable way. In one embodiment of the invention the 3DES encryption algorithm is used. An implementation of this algorithm is provided in the 3DES library of the .NET development platform. The .NET 3DBS library provides functionality to allow generation of encryption keys, and such functionality is used to obtain a suitable encryption key and the compressed data is encrypted at step S9 using the key obtained at step S8. Data encrypted in this way is converted to alphanumeric form at step S10, and provided by the pod 8 to the printer controller 7 via the data communication link at step S11. This security code can then be printed on an item passing along the production line 2 by the printhead 1.

Having printed a security code, various data is temporarily stored locally at the pod 8. This data includes the private data determined at step S6, the public data determined at step S5, and the decrypt key useable to decrypt the security code generated by step S10. This data is stored at step S12. Periodically, typically at the end of processing for a particular batch of products, data is transmitted from the local data store of the pod 8 to the verification server 18. This transfer takes place at step S13.

Having presented an overview of processing used to generate a security code, a more detailed description of parts of that process is now described. First, it has been indicated that the private data can take any convenient form. In preferred embodiments of the present invention the private data selected is a combination of a number of data items. Specifically, the private data comprises a batch start date expressed in the form DDMMYYYY where DD indicates a day, MM indicates a month and YYYY indicates a year, and a batch start time of the form hh:mmas:ms, where hh indicates the number of hours, mm indicates the number of minutes, ss indicates the number of seconds, and ms indicates the number of milliseconds. The private data additionally comprises a suffix count and a security code count. The nature and purpose of the suffix code and security code count is described in further detail below.

Preferred embodiments of the present invention encrypt seven bytes of data. It is therefore necessary to compress the determined private data, and such compression is carried at step S7. Typically, if the determined private data comprises approximately twenty bytes of data then the compressed data output from step S7 comprises seven bytes of data.

In preferred embodiment of the present invention, the encryption carried out at step S9 uses the 3DES algorithm, using an encryption key generated for each batch of products individually. That is, at step S8, a new encryption key is generated for each batch of products to which security codes are to be applied. The 3DES encryption algorithm takes 7 bytes of compressed data, and generates 8 bytes of encrypted data. These 8 bytes of encrypted data are converted to a alphanumeric form at step S10, resulting in 13 characters of alphanumeric text which are transmitted to the printer using a suitable communication protocol known to the printer.

Although the generation and application of security codes has been described with reference to Figure 3, various features of the process are described in further detail with reference to subsequent figures.

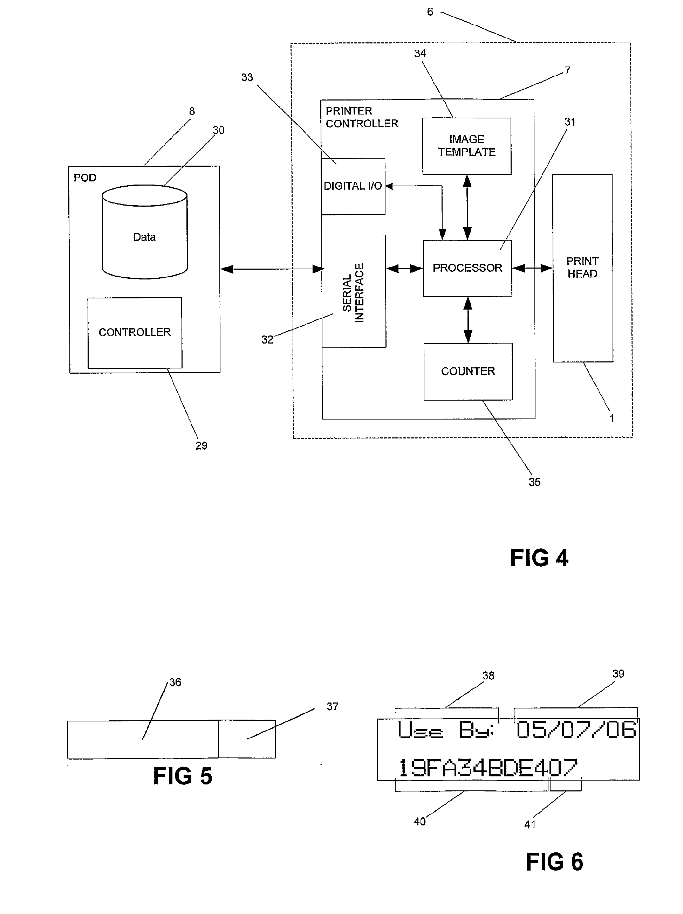

Figure 4 is a schematic illustration showing the printer 6 and the associated pod 8 in further detail. It can be seen that the pod 8 comprises a controller 29 and a data store 30. It can further be seen that the printer controller 7 of the printer 6 includes a processor 31. The processor 31 is in communication with a serial interface 32 which provides RS232 based communication between the pod 8 and the printer controller 7. The processor 31 is in further communication with a digital input/output (I/O) interface 33 which also provides communication between the processor 31 and the controller of the production line 2 as described above.. The processor 31 is in further communication with a memory 34 which stores an image template used to define data to be printed. The processor is also in communication with a counter 35 which can provide data to be inserted into a counter field provided by the image template 34. The use of the counter is described in further detail below. It can be seen in Figure 4 that the processor 31 communicates with the printhead 1 so as to cause printing operations to take place.

In general terms, an image template to be stored in the memory 34 is selected by an operator. Such selection can be carried out locally at the printer 6, or alternatively remotely by a device connected to the factory wide network 15 or alternatively using pod 8. Typically, a "select template" command is used to provide appropriate template selection commands to the printer controller 7. A single template is typically used by the printer for the duration of a production batch run. It is this template which is stored in the memory 34, and the template defines the format of the image to be printed.

The image template stored in memory 34 not only defines the size and font of each field, and the print placement of each field relative to others, but also the nature of data that will be printed in each field, which may be fixed or which may vary from print to print. The fields are processed by the processor 31 to generate an image to be printed.

Referring now to Figure 5, a format of security code used in preferred embodiments of the present invention is illustrated. The illustrated security code includes a first component 36 and a second component 37. In general terms, the first component 36 is generated using an encryption algorithm of the type described above, while the second component 37 is automatically generated by the counter 35. This is described in further detail below.

Figure 6 illustrates an example image printed by the printhead 1 on the packaging of items passing along the production line 2. The example image of Figure 6 includes a security code of the type illustrated in Figure 5. The image of Figure 6 is based upon an appropriately formatted image template of the type described above.

The image of Figure 6 includes 4 fields. A first field 38 is a field containing "fixed" data, which will not change during the production batch. In this case, the fixed text is the text "Use By:".

A second field 39 is a field containing date data. This date may be entered by a user at the beginning of a batch, or alternatively be automatically calculated by the processor 31 using an internal real-time clock. Where data is calculated by the processor 31, the printed date data might automatically change at some predetermined time, for example midnight.

Third and fourth fields 40, 41 of the image of Figure 6 together represent a security code. The third field 40 is an insert field, sometimes referred to as a remote data field. The data printed in this field is received by the processor 31 via the serial interface 32, the data having been provided by the pod 8. The fourth field is a counter field. This printed data is internally generated by the printer controller 7 using the counter 35. It could be that the operator resets the counter 35 to zero, for example, at the beginning of a batch. It should further be noted that the counter 35 can take any convenient form, such as numeric, alpha, or alphanumeric, the nature of the counter being specified by the image template stored in the memory 34. The size of each count increment can be programmed into the counter 35. In the example described herein, the counter 35 is a 2-digit numeric counter which increments 1 count per print and wraps around to zero upon reaching a value of 99

It should be noted that the template stored in the memory 34 is created to purposefully align the counter field 41 adjacent the insert field 40, so that the counter field 41 acts as a suffix to the insert field 40, and the fields 40, 41 together form the security code. It will be appreciated that other arrangements of the fields 40, 41 can be used to obtain similar results.

Using security codes of the type shown in Figure 5, as exemplified by the image of Figure 6, it will be appreciated that the printhead 1 will print every item passing along the production line 2 with a different security code, assuming that new insert data for the field 40 is received by the processor 31, and processed by the processor 31, before the counter 35 "wraps around".

In this example, suppose the counter field is set to a value of 00 when first insert data is received. Provided that replacement insert data is received and processed before 100 prints (and hence the counter is counted to 99) are printed, then all products printed with the template stored in the memory 34 configured to generate images of the type shown in Figure 6 will be uniquely identified by the combination of the insert data of field 40 and the counter data in the field 41. That is, each product will have a unique security code.

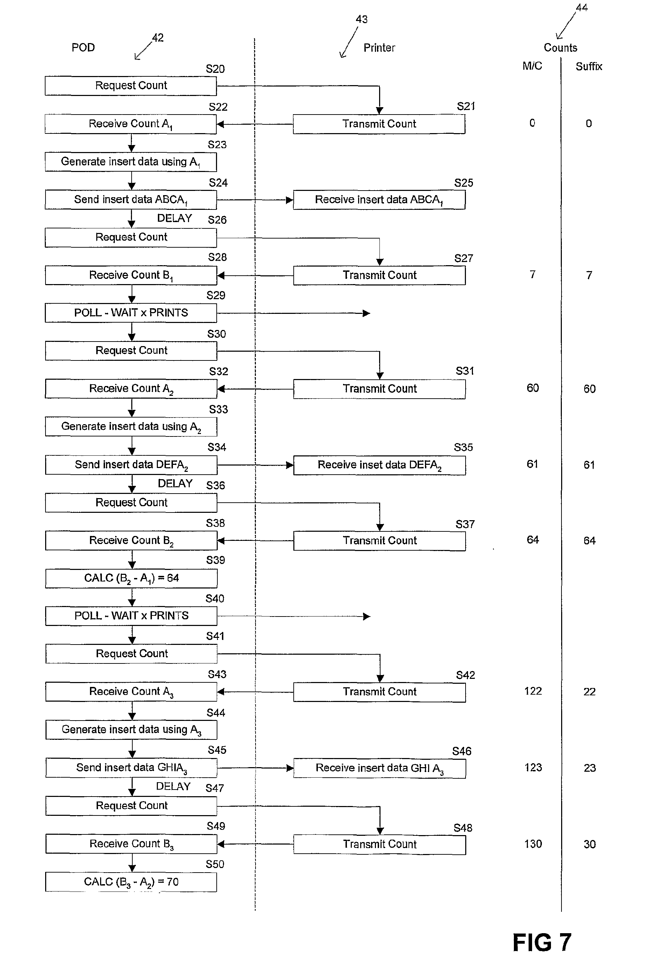

It has been described in general terms, that the pod 8 of Figure 1 generates security codes and provides the security codes to the printer 6 for printing. These security codes are included in the insert field 40 shown in Figure 6 and are hereafter referred to as insert data. Given that it is desirable to include unique security codes on each product, the method described above, which uses an insert field 40 configured to receive encryption insert data together with the counter field 41 allows a unique code to be more easily applied to products without requiring that uniquely encrypted insert data is generated for each product individually. That is, for single insert data generated using the method shown in Figure 3, and included in the field 40, the use of the counter field 41 allows one set of encrypted data to provide a plurality of unique security codes. It will however be appreciated that for the purposes of subsequent verification, the verification server 18 and the associated secure database 19 is required to know which counter values are validly associated with particular insert data. Given that counter values to be included in the field 41 are generated by the counter 35, while insert data to be included in the field 40 is generated by the pod 8, communication between the pod 8 and the printer controller 7 must be carefully controlled so as to ensure that appropriate counter values are obtained by the pod 8 and subsequently provided to the verification server 18 over the factory wide network 15 and the Internet 16. In some embodiments of the invention, this is achieved synchronously. Specifically, new insert data is provided by the pod 8 to the printer controller 7 at a particular time. At that time the value of the printers counter is obtained and it can therefore be deduced that all lower values of the counter are associated with previous insert data. If the counter value is reset each time new insert data is provided, in this way it can be determined that by obtaining the counter value when new insert data is provided counter values associated with each item of insert data can be obtained. This is now described with reference to Figure 7.

Referring to Figure 7 it can be seen that the illustrated processing comprises a first part 42 being processing carried out at the pod 8, and a second part 43 being processing carried out at the printer 6. It can further be seen that Figure 7 shows count data 44 showing values of the counter 35 both as absolute counter values, and as suffix values. That is, although on reaching 99 the counter may continue to count to 100, the suffix would continue at value 00, given that the suffix is limited to two digits. Suffix values may be derived from absolute counter values by dividing the absolute value by 100, and taking the resulting remainder. That is:
Suffix counter = Absolute value MOD 100;

Thus, where operations based upon counter values obtained from the printer are described below, it is to be understood that a MOD operation of the type described above is carried out before values are processed.

Referring to Figure 7, at step S20, before transmitting insert data to be included in the insert field 40, the pod 8 requests the current value of the counter 35. In response to the processing of step S20, the printer transmits the current counter value at step S21, and this is received by the pod 8 at step S22. This value, denoted A₁, is 0. Having received the counter value at step S22, insert data is generated at step S23. Generation of the insert data involves the encryption of private data as described above. It was indicated above that the private data included a batch start date and batch start time having a format described above. It was also indicated that the private data included a suffix count It can now be seen that this suffix count is the value of the counter 35 obtained by the pod 8 from the printer before the insert data is generated. That is, the security code generated at step S23 involves encryption of the counter value A₁. Additionally, the private data includes data referred to above as a "security code count", this being the number of different encryptions that have been carried out. This security code count ensures that each data item to be inserted into the insert field 40 is generated with unique data. It will be appreciated that for a given batch the batch start date and batch start time data will not vary. It will also be appreciated that it is possible that the counter value read from the printer 6 may have the same value for two encryption operations. Thus, the security code count is required to ensure that the private data to be encrypted is unique within that batch.

Having generated appropriate insert data at step S23, this insert data is provided to the printer at step S24. It is received by the printer at step S25, and subsequently inserted into the insert field 40 for printing. After a predetermined delay (typically 1 second), the pod 8 again requests the value of the counter 35 at step S26, in response to this request, the printer transmits the value of the counter 35 at step S27, and the transmitted counter value is received at step S28. Use of the counter value obtained at step S28 (denoted B₁ and being 7) is discussed below.

It is desired to provide new data to be included in the insert field 40 after a predetermined number of printing operations have taken place. The pod 8 is configured to determine when this number of printing operations have taken place by regularly polling the printer 6 by communicating with the serial interface 31. Such polling can effectively be carried out at intervals of one second. This polling is carried out at step S29 and involves obtaining details of the number of print operations carried out from the printer 6. The predetermined number of printing operations, for example 60 or 70, is selected so as to ensure that new insert data is provided before the counter "wraps around".

When the polling operations determine that the desired number of printing operations have been carried out, the pod 8 again requests the value of the counter 35 at step S30. The value of the counter 35 is transmitted to the pod 8 at step S31, and the transmitted value of the counter (denoted A₂ and being 60) is received by the pod 8 at step S32. Having obtained the value of the counter 35, a further insert data item for the insert field 40 is generated at step S33. This insert data is generated by encrypting private data including a suffix counter determined by the value of the counter 35 received at step S32. The generated insert data is transmitted to the printer at step S34, and received by the printer at step S35. After a predetermined delay (typically 1 second) the pod 8 requests the value of the counter 35 at step S36, and the value of the counter 35 is transmitted to the pod 8 at step S37. The transmitted counter value (now denoted B₂ and being 64) is received by the pod at step S38.

The processing described thus far with reference to Figure 7 allows the pod 8 to determine a number of counter values which may be associated with the insert data generated using the count value A₁. That is, values of the counter 35 which may be associated with the insert data transmitted to the printer at step S24. The number of counter values associated with the data transmitted at step S24 is determined at step S39 where a calculation is made which subtracts the value of the counter obtained at step S22 (A₁) from the value of the counter obtained at step S38 (B₂). In this case, it can be seen that the result of this calculation is 64.

It can be seen from Figure 7 that the calculation of step S39 determines the difference in counter values between a time before that at which insert data was transmitted at step S24 and a time after further insert data was provided. Thus, using these values it can be safely assumed that no more than the calculated number of counter values were associated with the insert data transmitted at step S24. That is, it is known that the counter can have started at a value no higher than that obtained at step S22 when using the data provided at step S24, and it has been found to be safe to assume that counter values no later than that received at step S38 were associated with the data transmitted at step S24 given the provision of new data at step S34, particularly given the imposed delay between steps S34 and S36.

It can be seen from Figure 7 that when insert data is provided at step S34, the counter 35 in fact has a value of 61, such that 61 counter values are associated with the insert data provided at step S24. Given that the calculation of step S39 determines that upto 64 counter values were associated with the insert data provided at step S24, it can be seen that all 61 actual counter values can be verified as described below. If however the counter value obtained at step S32 had been used, 60 counter values would have been determined to be associated with the insert data provided at step S24, such that the correct verification of an item having a security code based upon the sixty first counter value would not be possible. It should however be noted that security codes having the sixty second, sixty third and sixty fourth values will also correctly verify in the described embodiment, therefore adding some insecurity. That said, given that the number of additional counter values which will verify correctly is small, therefore the loss of security is minimal, and is further mitigated by additional verification methods described below.

Continuing to describe Figure 7, from the calculation of step S39, at step S40 a polling operation similar to that described above with reference to step S29 is carried out. When it is determined that a sufficient number of printing operations have been carried out, at step S41 the value of the counter 35 is requested, and the value of this counter is transmitted from the printer to the pod 8 at step S42. The transmitted counter value (in this case A₃ being 22) is received at the pod at step S43. Further insert data to be included in the field 40 is generated using the counter value received at step S43 at step S44, and the security code generated in this way is transmitted from the pod 8 to the printer 6 at step S45 and received by the printer at step S46. After a predetermined delay (typically 1 second) the pod 8 requests the value of the counter 35 from the printer at step S47, and this value is transmitted from the printer to the pod at step S48. The transmitted value for the counter 35 is received by the pod at step S49. At step S50, a calculation is performed to determine a range of counter values which are associated with the insert data provided at step S34. Again, it can be seen that this calculation is based upon a counter value obtained from the printer before the insert data was transmitted from the pod 8 to the printer 6 and upon a counter value obtained after further insert data had been provided to the printer by the pod. In this way, it can be determined that no more than the calculated number of counter values were associated with the insert data transmitted at step S34.

Verification methods and appropriate data stores are described in further detail below. However, it should be noted that when verifying a security code of the type included in the image of Figure 6 a two step process is required. A first step verifies the value of the insert field 40, while a second step verifies the value of the counter field 41. Verification of the counter field 41 is, in the described embodiment, based upon data obtained from the first step. In general terms, calculations such as those shown at steps S39 and S50 of Figure 7 generate a number of counter values associated with particular insert data. In preferred embodiments of the invention, numbers of counter values associated with a plurality of distinct values of the insert field 40 are calculated, and a maximum number of counter values is stored. Given that private data used to generate particular insert data includes an initial counter value (e.g. the value A₁ for the insert data generated at step S23), absolute counter values can be computed for verification purposes, using the counter value included within the private data (A₁ in the case of the inserted data generated at step S23) and the number of counter values associated with particular insert data (that is the value computed at step S39). This process is described in further detail below. For verification operations to be carried out using the computer network of Figure 1 it will be appreciated that appropriate data of the type described above needs to be obtainable from the verification server 18. Such data is therefore provided to the verification server as described below.

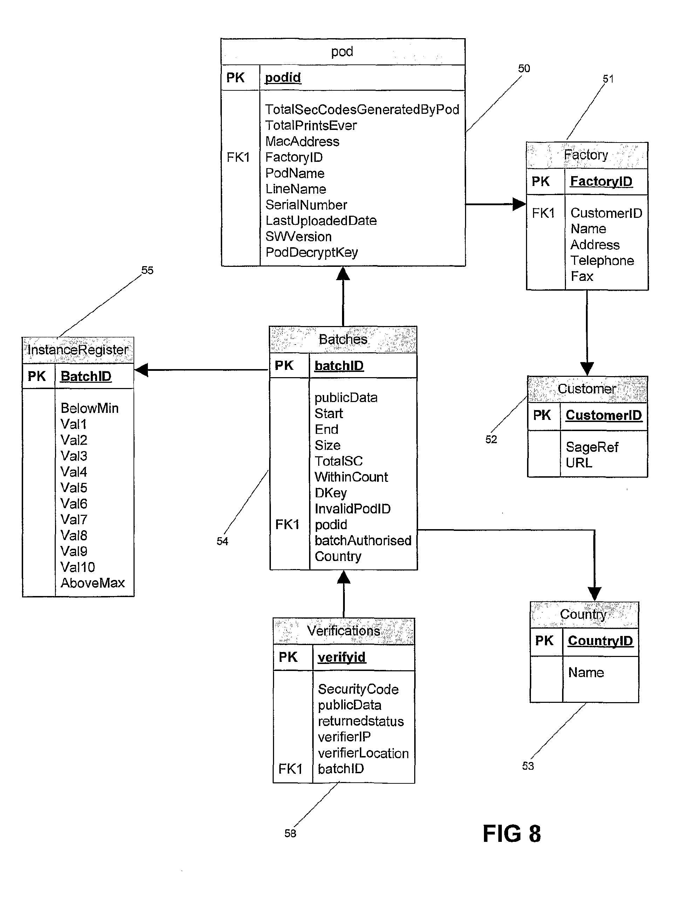

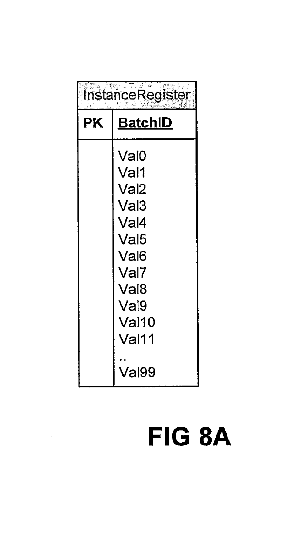

Before describing the transmission of data from the pod 8 to the verification server 18, the structure of the secure database 19 accessed using the verification server 18 is described. It can be seen from Figure 8 that the database comprises a plurality of tables which are now described. A pod table 50 stores details of pods which transmit data to the verification server 18. It can be seen that this table has a podid which acts as a primary key and is a unique identifier of a particular pod. The pod table 50 further includes various details relating to a pod. Specifically, a factoryid field acts as a foreign key referencing a factory table 51. In this way, a record of the pod table 50 identifies a record of the factory table 51 allowing details of a factory in which a pod is situated to be obtained. The pod table 50 further includes a podName field indicating a textual name for the pod, and a LineName field indicating a textual description of a production line on which the pod is located. A SerialNo field includes a serial number for the pod while a MacAddress field specifies a pod's MAC address. A Lastuploadeddate field stores data indicating a date on which data was last provided by a particular pod to the verification server 18. A SWversion field indicates a version of software currently being run by that pod.

It is preferred that data is transmitted from a pod to the verification server 18 in encrypted form. In order to allow this to take place, a PodDecryptkey field stores a key which should be applied so as to decrypt data provided by a particular pod. The pod table 50 further includes a TotalSeeCodesGeneratedbyPod field indicating the number of items of insert data generated by a particular pod and also a TotalPrintsEver field indicating a number of printing operations carried out by that pod.

The factory table 51 comprises a factoryID field which acts as a primary key for the table, a customerID field which references a record of a customer table 52 allowing a record representing a factory in the factory table 51 to be associated with a customer whose details are stored in the customer table 52. A name field is used to store a factory name, and fields storing factory contact details in the form of a address, telephone number and a fax number are also provided.

The customer table 52 comprises a customerID field which acts as a primary key and a customerSageRef field which can be used to associate data stored by the verification server with appropriate accounts data for a particular customer.

In some embodiments of the present invention it is desired to associate particular security codes with goods distributed to particular countries and regions of the world. In this way, it is possible to trace goods which have appeared in countries which would not be expected. In this way, so called "grey imports" can be identified. In order to allow such tracking to take place (as is described below) a countries table 53 is provided storing country details in the form of an identifier which acts as a primary key, and a field containing a country name.

Data provided to the verification server 18 by the pod 8 is stored in a batches table 54. Each record of the batches table has a primary key in the form of a batchID field. A podid field identifies a record of the pod table 50 describing a pod responsible for providing data relating to a particular batch. A country field identifies a record of the countries table 53 indicating a country to which goods in that batch are intended to be distributed. A publicData field is used to identify public data of the type described above for a particular batch. Start and End fields are used to indicate date and time information which a particular batch begins and ends. A Size field indicates the number of items within a particular batch while a TotalSC field identifies a number of insert data items provided to the printer by the pod 8 for use in security codes. A WithinCount field is used to indicate a maximum number of counter values which are associated with a particular insert data value for that batch. It should be noted that a single value is stored for an entire batch although that batch will be marked with security codes generated using a variety of insert data items, each insert data item potentially being associated with a different number of counter values. That is, for example, in the example of Figure 7 it can be seen that the insert data provided at step S24 is associated with up to 64 counter values (calculated at step S39) while the insert data provided at step S34 is associated with up to 70 counter values (as calculated at step S50). In this case, the WithinCount field will be set to 70 indicating that up to 70 products maybe marked with identical insert data but differing counter values so as to produce unique security codes.

The batches table 54 further includes a Dkey field used to store a decryption key used to decrypt security codes for a particular batch. A batchAuthorised field is used to indicate whether a data for a particular batch is enabled for verification. A Country field references a record of the Country table 53 described above. An InvalidPodID field is used to indicate whether a particular record of the batches table includes data received from a pod whose identification could not be correctly verified.

An instance registers table 55 has a batchID field which acts as a primary key and which references the batches table 54. Operation of this table is described in further detail below, although it should be noted that, in general terms, the vall to val10 fields each indicate a number of insert data items associated with each of a plurality of counter values. BelowMin and AboveMax fields are used to store data relating to counter values outside the range of values accommodated by the Val 1 ta Val 10 fields. In alternative embodiments of the present invention the instance registers table takes a form shown in Figure 8A. Here it can be seen that fields are provided for each value of a two digit counter, such that BelowMax and AboveMax fields are not required.

Finally, the database of Figure 8 includes a verifications table 58 which is used to store data indicating verification operations that have been carried out. A verifyID field acts as a primary key for the verifications table 58 while a batchID field acts as a foreign key referencing records of the batches table 54. A securitycode field stores a security code input by a user during a verification operation, while a publicdata field stores public data input by the user in combination with the security code. A returnedstatus field indicates whether the verification operation returns success or failure. Detail of an individual requesting verification are also stored in terms of a verifierIP address and a verifierLocation.

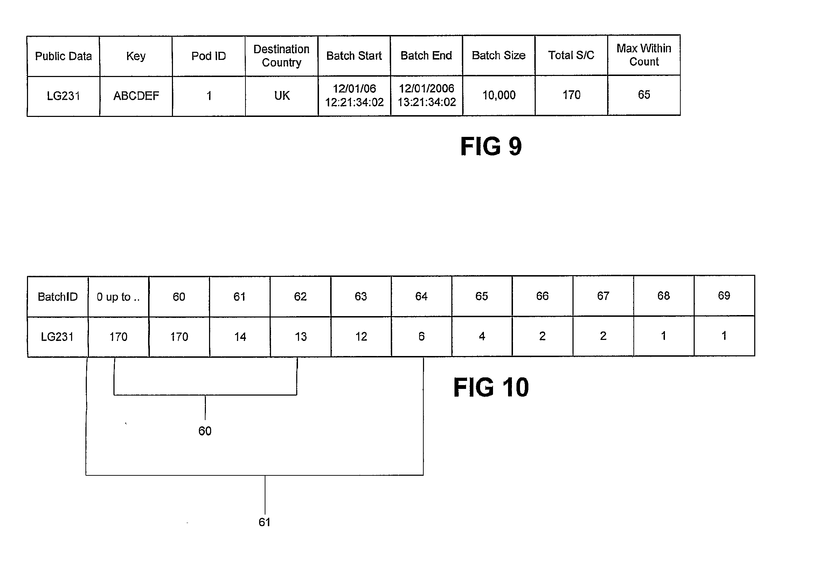

The structure of the database used to perform verification operations has been described in general terms above. Figures 9 and 10 show data which is temporarily stored locally at the pod 8 before that data is transmitted to the verification server 18. It can be seen that the data shown in Figure 9 comprises data relating to a particular batch. This data is uploaded to the batches table 54. The data includes public data, and an encryption key. A pod ID field, identifies the pod. Other data stored in the table of Figure 9 includes destination data, and data indicating batch start date and time which acts as private data to be encrypted. Data indicating batch end date and time is also stored. Data indicating the number of items within the batch, and the total number of insert data items generated is also stored as is data indicating values of counter values as has been described above and as is described in further detail below.

The table shown in Figure 10 stores data which is to be uploaded to the instance registers table 55 of Figure 8. It can be seen that a batchID field is used as a primary key for the instance registers table. The table of Figure 10 comprises a plurality of fields, each indicating a number of insert values associated with a particular number of counter values. That is, if an insert data item is provided to the printer and calculations such as that carried out at step S39 or step S50 of Figure 7 determine that 62 counter values could be associated with that insert data item, the value of all fields associated with values up to and including 62 (denoted 60) are incremented. Similarly, given that at step S39 it is determined that the insert data provided at step S24 can be associated with up to 64 counter values, the value of the fields associated with values up to and including 64 (denoted 61) are incremented. The use of the instance registers table provides improved verification security, as is described in further detail below.

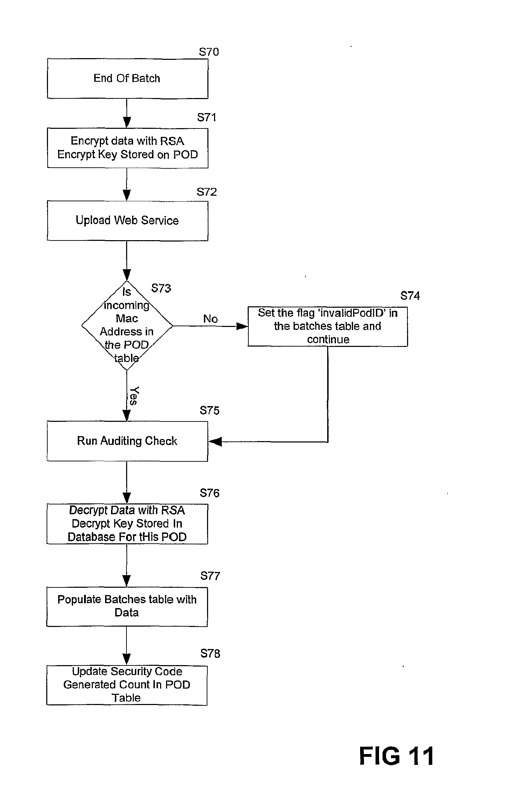

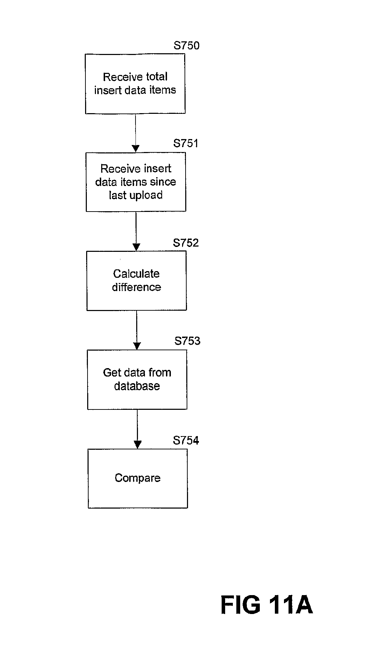

It has been indicated above that data is uploaded from the pod 8 to the verification server 18. Figure 11 is a flowchart showing the processing carried out during this transmission of data. At S70, the end of a batch printing operation is reached. At step S71 data of the type shown in Figure 9 is encrypted using a encryption key stored at the pod 8. Having carried out this encryption data is then uploaded from the pod 8 to the verification server 18 at step S72. It will be appreciated, with reference to Figure 1, that this involves the transmission of data over the factory wide network 15, and then onwards over the Internet 60 to the verification server 18.

Upon receiving data, the verification server checks whether the MAC address from which data is uploaded appears in the pod table 50 at step S73. In this way, only data from recognised pods can be added to the database of Figure 8. If the check of step S73 determiners that the MAC address is not included within the pod table 50, the invalidPodID field is set to false in the batches table 54 at step S74, and processing then continues at step S75. If the check of step S73 determines that the provided MAC address appears within the pod table 50, processing passes directly from step S73 to step S75. At step S75 auditing is carried out to validate data stored in the secure database. A decrypt key associated with uploading pod is obtained from the pods table 50 at step S76, and retrieved data is decrypted using this retrieved key. Fields of the batches table 54 are appropriately populated with received data at step S76, including storage of the received decryption key. At step S78, data in the pod table 50 indicating the number of insert data items generated by a particular pod is updated.

Having added data to the various tables as described above, at step S78 the podSCgen field of the pod table 50 is updated to indicate that further security codes have been generated by a particular pod. The use of this in verification operations is described below. Having updated the database in the manner described above, an XML file is created at step S79 for backup purposes, and this XML file is then provided to an appropriate computer network configured to carry out backup operations.

The auditing carried out at step S75 of Figure 11 is now described in further detail with reference to Figure 11A. In general terms, this auditing check is concerned with ensuring that data stored in the database of Figure 8 and data stored at a particular pod is consistent. This is achieved by the pod transmitting data indicating a number of operations to the server, and the server verifying this received data against data stored in the database. In this way, a security mechanism is provided to avoid data being written to the database which has not been genuinely created by a pod.

At step S750 of Figure 11A the server receives data from a pod indicating a total number of insert data items which have been generated by that pod. At step S751 data indicating a number of insert data items generated since data was last uploaded to the server is received. By subtracting the value received at step S751 from the value received at step S750 the total number of insert data items which should have been uploaded to the server can be calculated, and this calculation is carried out at step S752. At step S753 data indicating a number of insert data items stored in the database and associated with a particular pod is obtained. The value calculated at step S752 and the value obtained from the database at step S753 are compared at step S754. These values should be equal. If values are not equal it can be determined that there is an inconsistency and an appropriate alert can be provided to a user. It will be appreciated that the comparison at step S754 can be carried out in any convenient way. For example, the value calculated at step S752 can be subtracted from the value read from the database at step S753, and a check can be carried out to determine that the result of this calculation is indeed zero.

The data stored in the database and read at step S753 can be stored in any convenient way. For example, in the database of Figure 8 it can be seen that the pod table 50 includes a TotalSecCodesGeneratedbyPod field for this purpose. In alternative embodiments of the invention this data may be stored by storing a number of insert data items associated with each print job and summing the number of insert data items associated with all print jobs associated with a particular pod to obtain data indicating a total number of insert data items generated by that pod. It will be appreciated that the method described above requires a mechanism for pod identification. Any suitable identification can be used, such as for example use of pod MAC addresses.

As indicated above, it is preferred that data is transferred from a pod to the verification server at the end of a batch. Typically, a pod will attempt to connect to a verification server, and if such an attempt is unsuccessful will reattempt connection at predetermined time intervals. It will be appreciated that pods will typically have a limited memory space, and accordingly if a pod detects that it is close to filling that memory space it may present a message to a user and data may be transferred to the server before the end of the batch is reached. In preferred embodiments, before beginning processing for a particular batch a pod carries out a check to determine whether it has sufficient storage space.

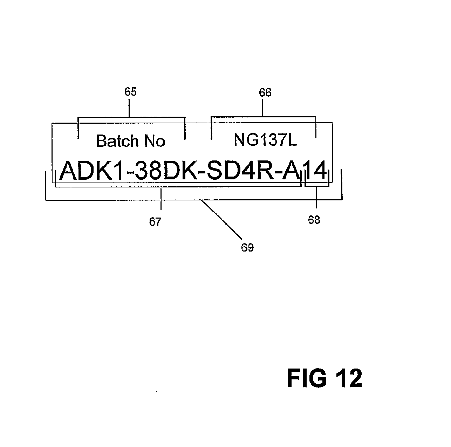

Having described the generation of security codes, the data that is generated during such operations, and the transmitting of such data to the verification server, the use of this data in verification is now described with reference to subsequent Figures. Figure 12 shows an example image applied to a product in an embodiment of the present invention. It is with reference to this image that verification operations are described. The image of Figure 12 has a general form similar to that of Figure 6. However, in the case of the image of Figure 12 a first field 65 comprises fixed data (Batch No). A second field 66 includes a batch number. The batch number either takes a form of an insert field for which data is provided to the printer 6 by the pod, or alternatively takes the form of an insert field for which a user inputs data directly to the printer using an appropriate interface. The image of Figure 12 further includes an insert field 67 and a counter field 68. The fields 67, 68 together define a security code 69 of the type described above. That is, data is encrypted by the pod 8 and provided to the printer for inclusion in the field 67 while a counter within the printer provides a counter value for the counter field 68. Generation of the security code 69 is carried out in the manner described above. In the described embodiment, the public data applied to the product and stored in the database of Figure 8 is the batch number which appears in the field 66.

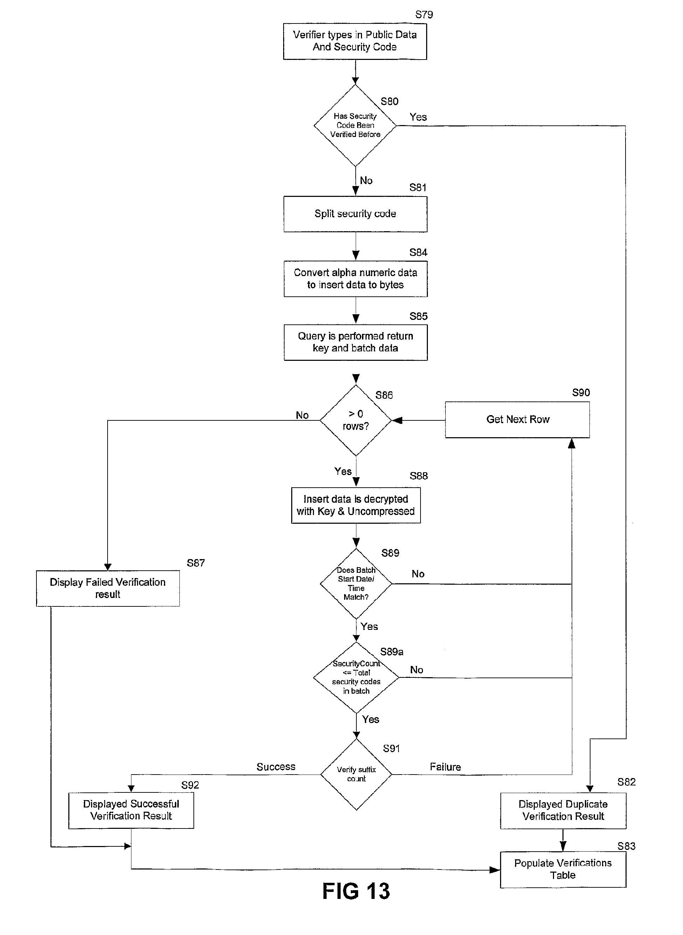

Figure 13 is a flowchart showing processing carried out when the security code 69 shown in Figure 12 is to be verified. At step S79 a user provides the public data from field 66 and the security code 69 to the verification server 18 (Figure 1). This is achieved by transmitting such data from one of the computing devices 20 to the verification server 18 over the Internet 16.

Given that security codes are generated using insert data 67 and a counter value 68 it will be appreciated that, as described above, assuming that insert data is provided sufficiently regularly, each product will be printed with a unique security code. Each request for verification results in a record being created in the verifications table 58 (Figure 8) at step S86. These records are used to detect duplicate verifications of a single security code as is now described.

A step S80 a check is made to determine whether the security code input by the user is already included in the security code field of a record of the verifications table. If it is determined that the security code is not included within the verifications table 58, processing passes from step S80 to step S81.

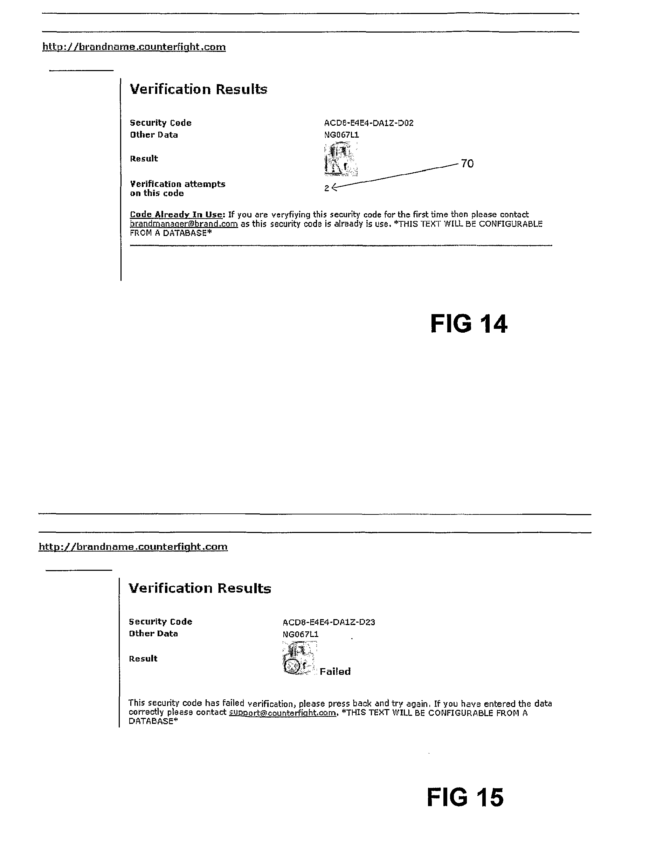

If however the check of step S80 determines that the security code input by the user has been previously verified, processing passes from step S80 to step S81 where a message of the type illustrated in Figure 14 is displayed to the user. It can be seen from Figure 14 that the user is informed that the code has been previously verified, and that an area 70 indicates a number of times the code has been verified. In order to provide this data, the check of step S80 is required to count records within the verifications table 58 having a security code field which corresponds to the security code input by the user. Having displayed a message of the type shown in Figure 14 at step S82, processing passes from step S82 to step S83 where a record of the verification operation is stored in the verifications table 58.

If processing continues at step S81, having received the public data and security code as input, the security code is first processed so as to differentiate the counter field 68 from the input field 67. Verification for these two fields is carried out separately as was mentioned above. This differentiation is carried out at step S81. At step S84, the insert data of the input security code is converted from its alphanumeric representation to a byte representation (this is a reversal of the processing carried out at step S10 of Figure 3 when the insert data was generated).

The verification server queries the database of Figure 8 at step S85. This query involves identifying rows of the batch table 54 having a value in the publicdata field which matches the data input from the field 66. If a genuine product is being validated, this query will result in one or more records being found for which the batch number of field 66 acted as the public data. This is detected at step S86. In the event that no records are located, it can be determined that the product being verified is not genuine and accordingly, an appropriate message is displayed to the user at step S87. Figure 15 shows a webpage which maybe displayed to a user at step S87 indicating that verification has not been successful. In this case, the verifications table 58 of Figure 8 is updated to indicate failed verification at step S83. In this case, a unique identifier for the verification operation is stored in the verifierID field while the batchID field has a null value. The public data and security code input by the user are stored in the securitycode and publicdata fields while the returnedstatus field indicates that verification result. verifierIP and verifierLocation fields store details relevant to the person requesting verification.

If the check of step S86 determines that the query returned one or more rows processing continues at step S88. Here, the insert data is decrypted with a decryption key, and the resulting decrypted data is uncompressed. The appropriate key is obtained from the batches table 54 of Figure 8. This is carried out by locating a key for the batch identifier retrieved using the publicdata field in the query of step S86.

Having carried out decryption and decompression at step S88, processing continues at step S89 where a check is carried out to determine whether the decrypted data matches the private data stored in the database. Specifically, the batch start date and time which is a component of the private data as described above is compared with corresponding data in the batches table 54. If no match is detected, it can be determined that the record of the batches table retrieved using the public data and processed thus far does not allow the security code to be verified. Accordingly, processing passes to step S90 where a further row retrieved by the query of step S85 is set for processing. Assuming that there is a further such row, processing passes back to step S86 and onwards to step S88. If however all retrieved rows have been processed it can be determined that the input security code was invalid and accordingly processing passes from step S90 to step S86 and then onwards to step S87 as described above.

If the check at S89 is successful, processing passes to step S89a. Here a check is made to determine whether the security code count value obtained by decryption is less than or equal to the value of the TotalSC field of the batches table 54 for that batch. If the check is unsuccessful then processing passes from step S89a to step S90 and onwards to step S86 as described above.

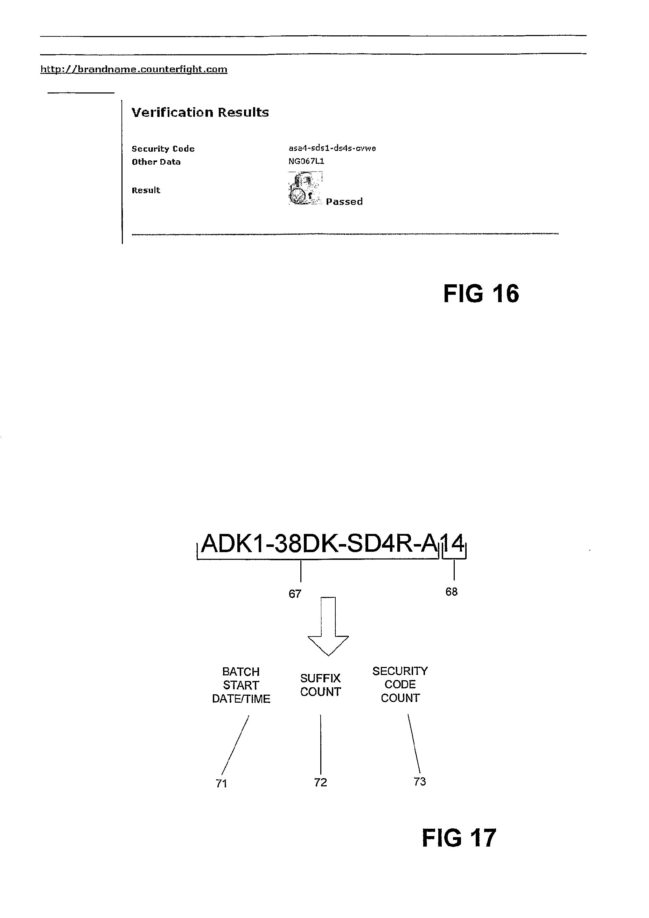

If however the check of step S89a is successful such that the retrieved data matches that obtained from the decryption operation, processing continues at step S91. Here, the counter field 68 is verified in a manner which is described in further detail below. If this verification is unsuccessful, processing passes from step S91 to step S90 and onwards to step S86 as described above. If however this verification is successful processing passes from step S91 to step S92 where a message reporting successful verification is displayed to the user. Figure 16 shows a webpage displaying an appropriate message.

It has been indicated above that at step S91 the suffix code is verified. This process is now described in further detail. Before describing the process however reference is made to Figure 17. Here, for clarity processing of the security code 69 included within the image of Figure 12 is shown in further detail. Specifically, it can be seen that the insert data 67 following operations shown in Figure 13 generates private data in the form of a batch start date and time 71, a suffix count 72, and a security code count 73. Additionally, the counter value 68 is also available for use in a verification operation as is described below.

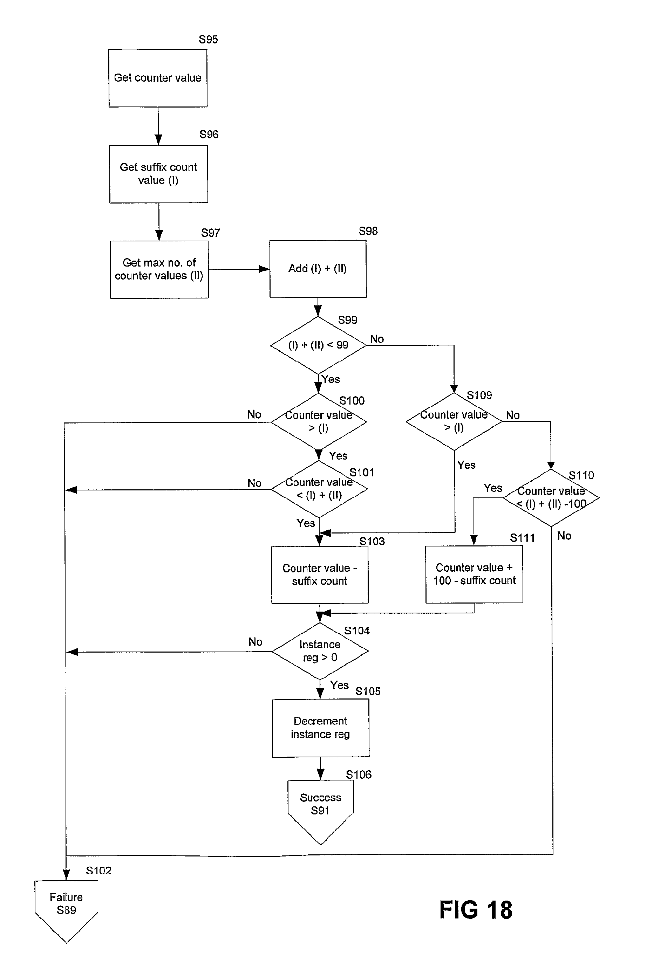

Referring to Figure 18, verification of the counter 68 is now described. As step S95 the counter value 68 is obtained, and at step S96 the suffix count value (denoted is obtained. This suffix count value is part of the private data which was the subject of encryption, and is obtained by the decryption operation as the suffix count 72 shown in Figure 17. At step S97, the maximum number of counter values associated with an item of insert data is obtained by obtaining the value of the WithinCount field from the batches table 54 (Figure 8). This maximum number of counter values is denoted II. At step S98 an addition operation is performed adding the value of the suffix count 72 (I) to the maximum number of counter values associated with an item of insert data obtained at step S97 (II). At step S99, a check is made to determine whether the result of the addition is less than 99. The check of step S99 determines whether, during the course of printing an item of insert data the counter "wrapped around". Verification of the counter value varies depending upon whether the counter value did wrap around as is described below.

If the counter value did not wrap around (that is if the sum of step S98 did not yield a value greater than 99) processing passes from step S99 to step S100. Here a check is made to determine whether the provided counter value appearing in the field 68 is greater than the suffix count 72 obtained at step S96. That is, if the counter value is not greater than the suffix count 72 it can be determined that the counter value cannot be valid. If however the counter value is greater than the suffix count value 72 processing passes to step S101 where a check is made to ensure that the counter value is less than the value of the sum generated at step S98. Again, if the counter value does not satisfy this inequality it can be determined that the counter value is not valid. In the event that the check of step S100 or step S101 flailed processing passes directly from step S100 or step S101 as appropriate to step S102 where processing returns to step S89 of Figure 13 given that the processed data does not allow verification to be successfully performed. Processing then continues as described with reference to Figure 13.

If however the counter value satisfies the inequalities specified at both of steps S100 and step S101 processing continues at step S103. Here, the suffix count 72 is subtracted from the provided counter value 68. Given that this line of processing occurs only when the counter has not wrapped around, it will be appreciated that the subtraction of step S103 provides a value which approximately indicates an instance of the application of particular insert data. This data is used to perform verification. Specifically, at step S104 a record of the instance registers table associated with the value generated at step S103 is located and a check is carried out to determine whether this has a value greater than zero. If the located instance register does have a value greater than zero it can be concluded that the suffix counter 68 has passed verification check and processing passes to step S105 where the instance register is decremented to show that a verification operation has been performed, and then onwards to step S106 where processing passes to step S91 of Figure 13 and continues in the manner described above.

If however the check of step S104 determines that the instance register does not have a value greater than zero it can be concluded that the security code presented for verification is invalid from the point of view of its counter values. It should be borne in mind that the presented security code cannot be a duplicate given the check already performed at step S80 of Figure 13.

It was described above that step S99 performs a check to determine whether the counter value wrapped around during the course of insert data being provided. Processing described with reference to steps 101 to 108 above assumes that the counter value did not wrap around. If the counter value did wrap around, processing passes from step S99 to step S109. Here, a check is carried out to determine whether the provided counter value has a value greater than the suffix value obtained at step S96. If this is the case, given that the counter value wrapped around it can safely be assumed that the counter value lies between the value of the suffix count and 99. Given that this part of the verification operation has completed successfully processing passes from step S109 to step S103 where it continues as described above.

If the step of S109 determines that the counter value is not greater than the value of the suffix count obtained at step S96, it cannot be determined that the security code is necessarily invalid. Specifically, the counter value would be less than the value of the suffix count if it occurred after the counter value wrapped around. Processing therefore passes from step S109 to step S110. Here, a check is carried out to determine whether the presented counter value has a value which is less than the sum of the suffix count value obtained at step S96, and the maximum number of counter values applied for particular insert data obtained at step S97, this sum having 100 subtracted from it to reflect the wrap around of the counter at the value 99. If the counter value does not satisfy the inequality of step S110, processing passes to step S102 where failure is reported as described above. That is, given that the counter value does not lie between the value of the suffix counter and 99, and also does not lie between the value of zero and the value of computation performed at step S110 it can be concluded that the counter value is invalid.

If however the inequality of step S110 is satisfied, processing passes from step S110 to step S111. Before the check of step S104 involving instance registers can be performed, it is first necessary to compute an instance value by taking the counter value, adding to it 100, and subtracting the suffix count obtained at step S96. This computation is required given that it can be seen from the outcomes of step S99 and step S109 that the counter wrapped around, and the counter value being verified occurred after wraparound. The computation of step S111 correctly computes an instance value which can then be used to query the instance registers table at S104 in the manner described above.

From the description presented with reference to Figure 18 it can be seen that verification of a counter value depends not only upon the counter value but also upon an encrypted suffix count value included within the insert data. It can also be seen from the diagram of Figure 18 that a counter value is verified both with reference to ensuring that it falls within a predetermined range (defined by the suffix count and the maximum number of counter values applied for particular insert data), and also with reference to the instance register stored within the database. Given that new insert data is provided after an approximately predetermined number of prints it will be appreciated that instance registers over a particular range will typically store high numbers however, outside this relatively small range there will only be a small number of instances which will occur, for example if there is a sudden surge in production throughput, or converse a delay in production throughput. The batches table stores only a maximum number of instances for particular insert data. That is, if a particular batch is printed with two different insert data items, each insert data item having a different number of counter instances associated with it, it is only the maximum number of instances which is stored within the batches table. Without the use of instance registers a large number of invalid counter values (defined with reference to the maximum number of counter values for particular insert data) will verify correctly, when for many items of insert data these values are in fact invalid. By keeping the instance registers table, and decrementing a record of this table when verification occurred it can be expected that instance registers outside the range applied for the majority of insert data items will be decremented, and this decrementation will be identified by the process of Figure 18.

To aid understanding, two specific examples of counter value verification are now presented.

First, suppose the code offered for verification is ABC92, where ABC is encrypted data and 92 is the counter value. First, the value ABC is decrypted and this generates a suffix count value of 3. Therefore, referring to Figure 18, at step S95 a value of 92 is obtained while at step S96 a value of 3 is obtained. The maximum number of counter values is retrieved at step S97, and for the currently processed batch that is 90. At step S98 an addition operation is carried out adding 3 to 90 to give 93. The check of step S99 results in processing passing to step S100. The check of step S100 ensures that the presented value 92 is greater then the value obtained at step S96 (3). Given that this check is satisfied, processing passes to step S101 where a check is made to ensure that the presented counter value 92 is less than the summation which is equal to 93. Processing therefore passes from step S101 to step S103 where the counter value 92 has the suffix count value 3 subtracted from it to generate a value 89. This indicates that the presented security code is the eighty-ninth instance of the insert data ABC. At step S104 a check is made to determine whether instance register 89 has a value greater than zero. If this is the case, the instance register is decremented at step S105, and success is therefore reported at step S106.

As a further example, suppose that the presented verification code is DEF12. Here, the counter value is 12, and DEF when decrypted, reveals a suffix count value of 70. Therefore, the counter value obtained at step S95 is 12, the suffix count value obtained at step S96 is 70, and when the database is queried, the maximum number of counter values associated with an insert data item for that batch is 60. Step S98 therefore adds 60 and 70 to generate 130. Given that this value is greater than 99, processing passes from step S99 to step S109. Given that the presented counter value is 12, it is clear that 12 is not greater than 70, and accordingly processing passes from step S109 to step S110. At step S110 the counter value (12) is compared with 30. Given that 12 is less than 30, the inequality specified at step S110 is satisfied, and processing passes from step S110 to step S111. The calculation of step S111 generate a value of 42. It can be seen that this is correct, the counter value 12 having been associated with the security code DEF at the forty second instance of the use of that security code. Having generated this value, the instance registers are queried to perform verification in the manner described.

The preceding description has explained how security codes are generated and applied to products, and how data is stored in a database and subsequently used to perform verification operations. It will be appreciated that it is important to ensure that the security of the verification database is maintained, so as to ensure that third parties cannot fraudulently enter data in that database thereby causing goods provided with non-genuine security codes to verify correctly. The database 19 provided by the verification server 18 (Figure 1) is provided with a number of security mechanisms which will be well known to those skilled in the art, the security mechanisms being intended to make access to and modification of the database very difficult to an unauthorised person. Some of these security mechanisms have been described above, such as the validation of a pod's MAC address before data is entered into the batches table 54.

To provide additional security, referring back to the database of Figure 8 it can be observed that the batches table includes a TotalSC field indicating a number of data items which have been generated during a particular batch. Additionally, the pod table 50 has a TotalSecCodesGeneratedByPod field storing a number of insert data items generated by a particular pod. If the database is consistent, it can be seen that the sum of the TotalSC field in records of the batches table 54 having a podid value corresponding to a particular pod must be the same as the value of the TotalSecCodesGeneratedByPod field in the pod table record for that pod. If this is not the case, it can be deduced that there is an inconsistency in the database which may indicate fraudulent modification of the database.

Additional security can be provided by recording at each pod the number of insert data items which have been generated by that pod. This value stored at a particular pod can be compared with a record of the pod table 50 corresponding to that pod and the values of insert data items generated should match. Any inconsistency again indicates potentially fraudulent access to the verification database, or tampering with the pod.

In preferred embodiments of the present invention, when data is uploaded to the secure database from a pod, the pod transmits data indicating the number of data items which have been generated during a particular batch and also data indicating a total number of data items which have been generated by the pod. When this data is received, the number of data items generated in the currently processed batch is subtracted from the total number of data items. It can be determined that the result of this subtraction should be equal to the values obtained from the pod table 50 and the batches table 54 described above. Auditing of this type can be carried out at step S75 af Figure 11.

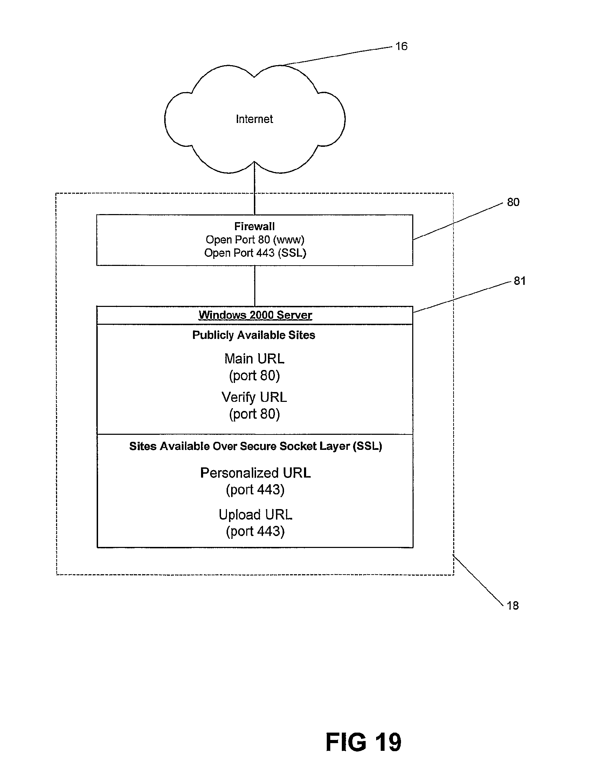

Figure 19 illustrates an example configuration of the verification server 18 connected to the Internet 16. It can be seen that verification server 18 is provided with a firewall 80 having two open ports. A first open port allows conventional web browser access via port 80, while a second port allows access using the secure socket layer protocol, a technology that encrypts data transmission so as to prevent a third party intercepting data transmitted over the Internet. The verification server 18 further includes server software 81. The server is associated with a particular domain name and provides access to various URLs A first main URL is accessible through port 80 while a further verify URL is also accessible through port 80. The verify URL is used to receive data which allows verification operations to be carried out. The server software 81 further provides two URLs accessible only over the secure socket layer. These are a personalised URL and an upload URL. These are used to transfer sensitive information to the verification server 18 as well as to transfer private data used to generate insert data and also associated encryption keys.

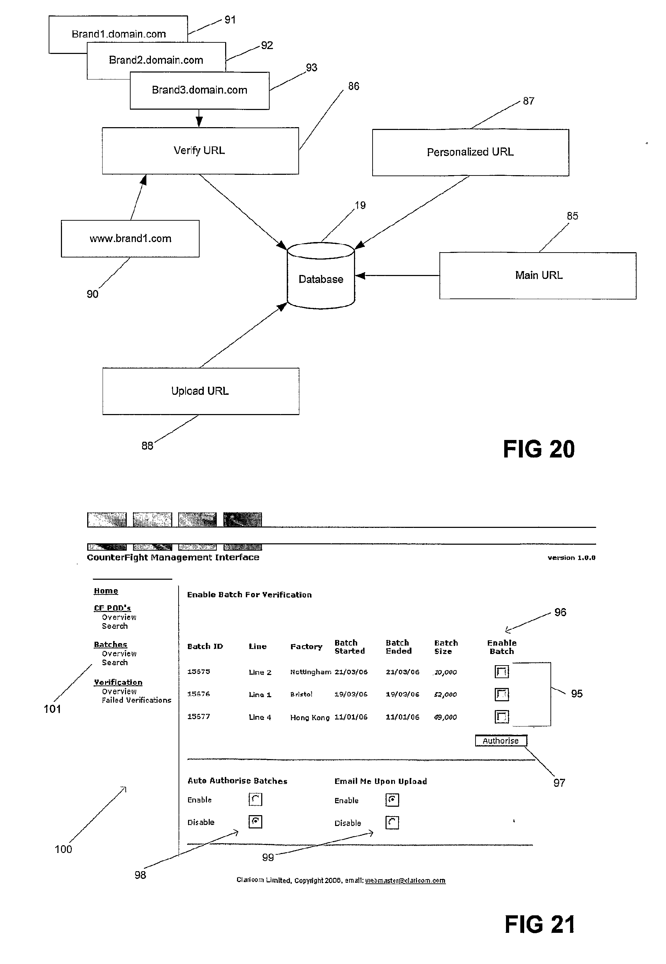

Figure 20 is a schematic illustration showing that the database 19 accessed via the verification server 18 is accessible via the main URL 85 and the verify URL 86, both accessible through port 80 of the verification server 18 as described with reference to Figure 19. Similarly, the personalised URL 87 and the uploadURL 88 accessible through port 443 of the verification server 18 can also be used to access the database 19.

The verification server 18 may, in some embodiments of the present invention, be operated by a verification service provider. This verification service provider may provide security code authentication services to a plurality of brand owners. Each of these brand owners may wish to provide an authentication service to their customers through part of there own website. Accordingly, a brand owner is likely to prefer that in order to perform verification operations a consumer accesses a URL of the form www.brand1.com 90 where that website is a homepage of that brand owner, and provides access to a page onto which a user may enter public data and a security code to cause a verification operation to be carried out. Such a page will cause data to be transmitted to the verifyURL 86 so as to allow verification operations to take place.

In alternative embodiments of the present invention, the verification service provider'sdomain provides all webpages used to receive information required for verification. In the illustration of Figure 20 it can be seen that URLs brand1.domain.com, brand2.domain.com and brand3.domain.com, 91, 92, 93 are each provided by the verification server 18 and each cause data to be communicate to the verify URL 86 to allow verification operations to be carried out. It will be appreciated that various alternative configurations can be used so as to allow verification operations to take place.

In preferred embodiments of the invention, consumers are able to carry out verification through a website of the type described above without prior registration. However, it may be desired to allow other classes of users to carry out verification operations only after registration. Such classes of users may include enforcement officials, brand owners and wholesalers.

Referring back to Figures 19 and 20, it was indicated that the personalised URL provides access to the secure database 19 via the verification server 18. Such access is carried out over the secure socket layer through port 443. The personalised URL provides a brand manager with an interface to the secure database 19 so that various operations can take place. Webpages provided to enable such operations to take place are now described with reference to Figures 21. to 24.

Referring first to Figure 21, a webpage is provided which provides brand owner with a user interface displaying details of batches for that brand manager which are stored within the secure database 19. It can be seen that the interface of Figure 21 includes data for three batches 95. For each batch a batch id is displayed as is the identification of a production line and a factory. Batch start and batch end dates are also included as are a number of items included within that batch. Enable batch check boxes 96 are provided allowing a brand manager to enable batches for verification. Having selected batches which are to be enabled for verification, an authorise button 97 is used to store appropriate data within the secure database.

The provision of a user interface enabling batches for verification provides additional security for the system. Specifically, before any products within a batch can be verified a brand owner must verify that data within the database associated with that batch is in fact authentic, and therefore enabled for verification. This presents a further obstacle for a third party attempting to fraudulently enter data into the database, given that additionally they will need to ensure that such data is enabled for verification purposes. In such a case, the verification operations described above are modified so as to involve a check that data to be processed has been enabled for verification.

The interface of Figure 21 further includes a pair of radio buttons 98 which indicate whether the batches should be automatically enabled on upload. Thus it may be the case that a brand manager decides that the additional security provided by individual batch enablement is not required, such that automatic enablement of batches on upload should be allowed. A further set of radio buttons 99 provides an option such as a brand manager may be emailed when batch data relating to their products is uploaded. This is particularly valuable if batch data is to be enabled for verification manually, given that it ensures that a brand manager is aware that there is data within the database which is not yet enabled.

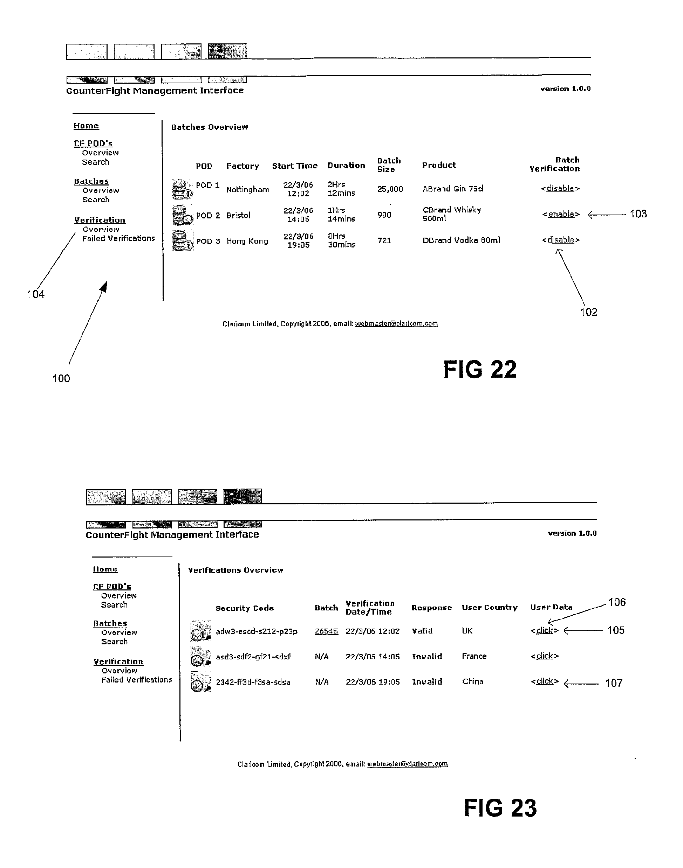

The interface of Figure 21 is used specifically to enable batches for verification. It can be seen that an area 100 provides a user with various options which can be used to navigate to other parts of the user interface. A batches overview option 101 is selectable to display an interface as shown in Figure 22.

Referring to Figure 22, the displayed interface includes data for a plurality of batches for which a brand manager is responsible. It can be seen that in Figure 22 data for three batches is presented. For each batch a batch verification column 102 allows verification operations for products within that batch to be enabled or disabled as appropriate. That is, data relating to pod 2 103 is currently disabled for verification, such that an "enable" option may be selected to enable such verification operations to be carried out. The ability to enable and disable data for various batches is valuable given that it allows data relating to batches of products which have been recalled to be disabled from the point of view of verification operations.

The area 100 further provides a verification overview option 104 which can be selected to cause display of a user interface as shown in Figure 23. The user interface of Figure 23 presents details of verification operations that have been carried out. For each verification operation a security code entered by a user is displayed together with details relating to the verification operation carried out on that security code. For example, details of a first verification operation 105 include a security code, a batch number with which that security code was identified to be associated, and details of the verification operation in terms of the data and time at which it was carried out, the response provided, and the country in which the user was located. A button 106 is provided to allow a user to obtain further details relating to a user who carried out the verification operation. It can be seen that data 107 relating to a further verification operation carried out resulted in verification failing. In this case, no batch number can be displayed given that the security code could not be verified. However, details of the verification operation in terms of date and time, the response provided and the user country are provided as is a button to cause the display of further user data.

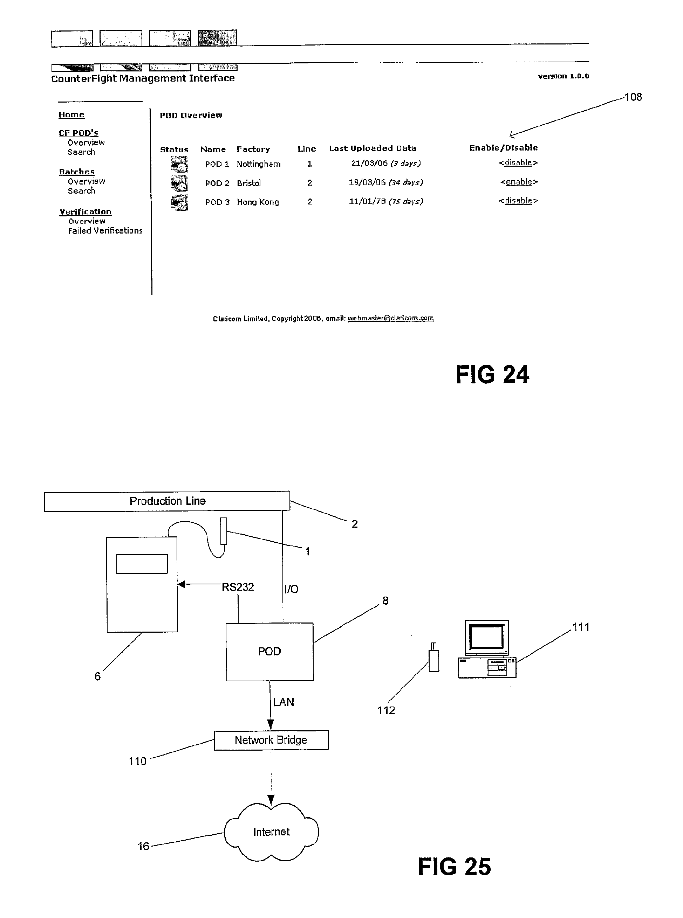

The user interface provided by the Personalised URL also includes a screen as shown in Figure 24. The screen of Figure 24 includes data relating to pods from which data to be stored in the verification database can be received. It can be seen that details of each pod are provided along with data relating to its location in terms of factory and production line. Additionally, data relating to a date on which data was last uploaded is displayed. Buttons 108 are provided allowing a user to enable or disable operation of a particular pod. This is useful if, for example, a pod is stolen so as to prevent an unauthorised third party from using that pod to enter non-genuine data in the verification database 18.

Referring back to Figures 1 and 4, operation of the pod 8 and its communication capabilities are now described in further detail.

Figure 25 illustrates a first manner of operating the pod 8 which is in communication with the printer 6, the printer 6 including the printhead 1 capable of printing data onto items passing along the production line 2. In the configuration illustrated in Figure 25, an image template is created using a desktop PC 111. The created image template is stored on a removable storage device 112 which can be connected to the pod 8. A suitable storage device is a USB memory stick. Having stored the image template on the removable storage device 112, this removable storage device is engaged with the pod 8 so as to cause the image template to be transferred from the removable storage device 112 to a memory of the pod 8. Subsequently, the image template can be provided from the pod 8 to the printer 6. The created image template will include an insert field of the type described above, and at predetermined intervals as described above, the pod 8 will provide insert data in the form of encrypted data to be included within the insert field of the image template.

It can further be seen from the illustration of Figure 25 that the pod 8 still has network connectivity to the Internet 16 via the network bridge 110. This allows the pod 8 to transmit data used to generate security codes to the verification server 18 for use in subsequent verification operations.

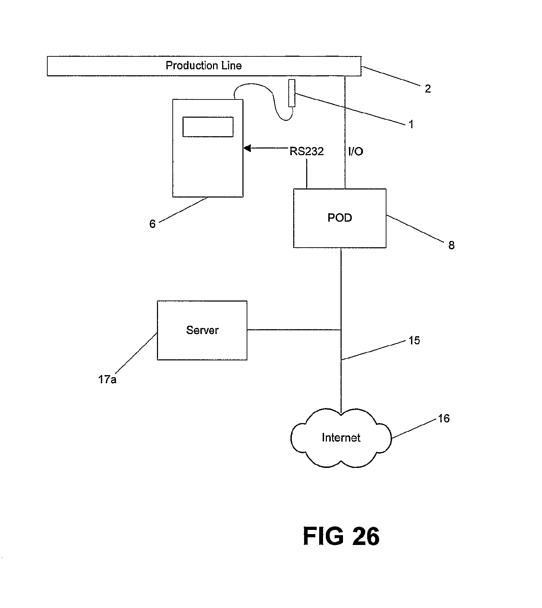

Figure 26 shows a different configuration for the pod 8. Here, the pod 8 and its communication capabilities are essentially as described above with reference to Figure 1. That is, the pod 8 is connected to the factory wide network 15, which in turn is connected to the Internet 16. The print data server 17a is also connected to the factory wide network 15 and in this way image templates are downloaded from the print data server 17a to the pod 8. Operation is essentially as described with references to Figure 25, save that instead of the use of the removable storage device 112, data is provided to the pod 8 over the factory wide network 15.

In a preferred embodiment, the pod 8, is provided with an operating system. In the configuration illustrated in Figure 25, running the Windows® XP Embedded operating system within the pod is currently preferred, In the configuration shown in Figure 26, running the Windows® CE operating system on the pod 8 is preferred. It will of course be appreciated that other operating systems could suitably be used.

Two configurations for the pod 8 have been described with reference to Figures 25 and 26. The configuration shown in Figure 26 is advantageous in that the print data server 17a can store a plurality of image templates which can easily downloaded to the pod 8 as and when required. However, the configuration illustrated in Figure 25 is preferred for some applications given that installation is made easier, and overall security is enhanced.

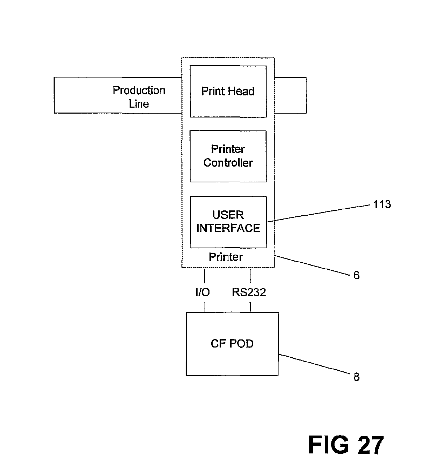

The configurations of the pod described with reference to Figures 25 and 26 assume that the printer 6 is configured to receive an image template file from the pod 8 which is used to define printing operations which are to be carried out. However this is not always the case. Some printers are configured by a user using an interface provided by the printer to specify the format of printing operations which are to be carried out. Figure 27 shows a schematic illustration of an embodiment of the invention in which the printer 6 is provided with the user interface 113. In such a case, the format of images to be printed is specified using the user interface 113. In such a case, restrictions must be placed upon the nature of the image generated by the user. Specifically, it may be specified that the generated image must include an insert field capable of receiving insert data from the pod 8 which is to form the encrypted part of the security code in the manner described above. Various restrictions will typically need to be applied in terms of the format of the field and its name so as to ensure that insert data provided by the pod 8 is correctly processed by the printer 6.

It maybe considered that the embodiment illustrated in Figure 27 is disadvantageous given that image templates are created at each printer individually, and furthermore given that interfaces provided by printers for such image creation operations are typically rather primitive. That said, many printers in widespread use do specify printing operations in this way, and it is to be noted that the present invention can be employed on such printers assuming that images to be printed are specified in such a way that data received from the pod 8 can be correctly processed.

In other embodiments of the invention, image templates may be designed using an interface provided by the pod 8. Templates so designed are then provided by the pod 8 to the printer 6. Alternatively, image template files may be provided to the pod 8 via the factory wide network 15. Such data may originate from a computer connected to the Internet. 16 which is in turn connected to the factory wide network 15. In alternative embodiments of the invention, image templates may be generated on a computer which is temporarily connected to the pod using a suitable communications link.

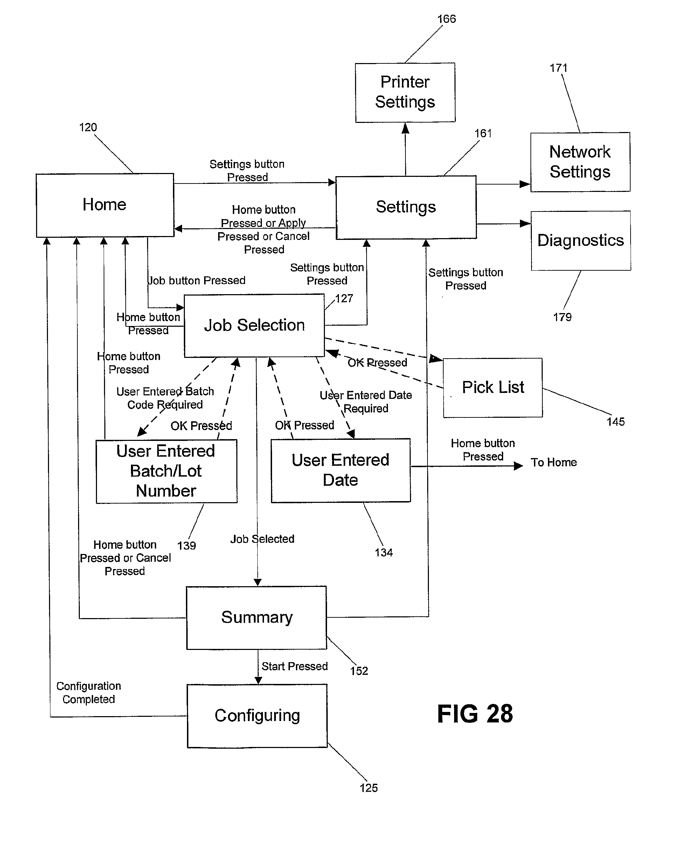

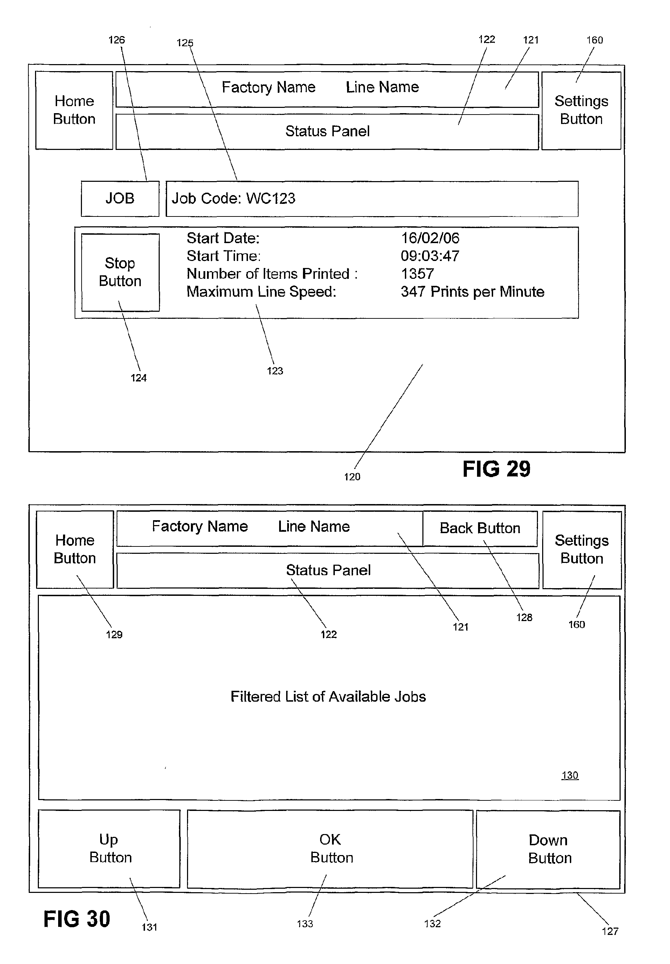

A user interface provided by the pod 8 in the embodiment of the invention shown in Figure 25 is now described. Figure 28 illustrates the general structure of the user interface provided by the pod 8. It can be seen that a plurality of screens are provided, and ways in which a user can move between those screens are illustrated by appropriate arrows. It can be seen that a home screen 120 is provided, and this home screen is illustrated in Figure 29. It can be seen that the screen includes a first area 121 identifying the factory and production line with which the pod is associated, and a second area 122 providing current status information for the pod. The area 122 may additionally show data relating to the current status of the printer. An area 123 displays data relevant to a current print job. It can be seen that this data includes the date and time at which the print job was started, the number of items printed, and the maximum line of speed. If the printer is currently engaged in a printing operation a stop button 124 can be used to end that printing operation. An area 125 of the screen 120 provides a job code for the job currently being printed. A job button 126 can be selected to display a job selection screen 127.

This relationship between the home screen 120 and the job selection screen 127 is shown in Figure 28. The job selection screen 127 is shown in Figure 30. Here the first area 121 displaying factory name and line name information is again included as is the second area 121 displaying status information in the manner described above. Additionally, a back button 128 is provided which, when selected, will cause the previous displayed screen to be redisplayed. A home button 129 is selectable to cause the home screen 120 to be displayed, and again this relationship is illustrated in Figure 28. The job selection screen 127 provides a user selectable list of jobs 130 from which a user may select. The pod 8 is preferably provided with a touch screen interface. Accordingly, the touch screen provides an up button 131 and a down button 132 which are used to scroll through the list of jobs 130. When the desired job is highlighted, an OK button 133 is selected and this job is then selected for printing.

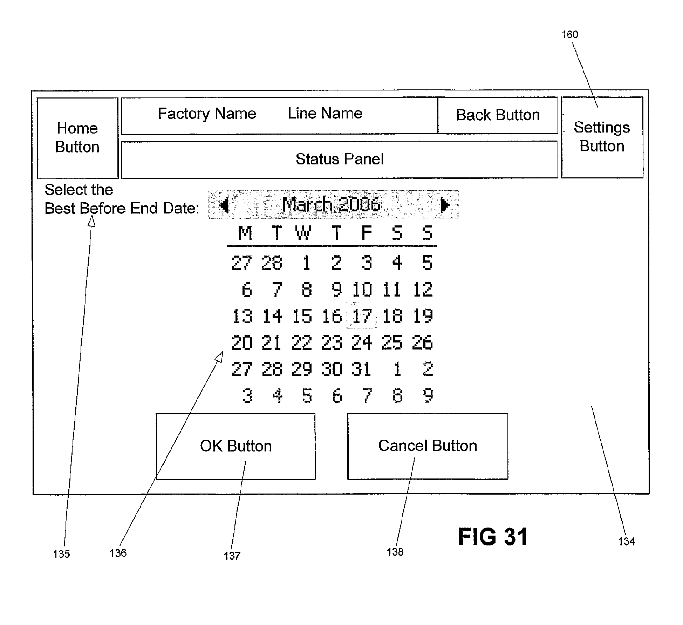

It may be that a job selected from the list 130 requires a user entered date to be input via the pod 8. Accordingly, if a selected image template has such a requirement selecting the okay button 133 within the job selection screen 127 causes the display of a user entered date screen 134 shown in Figure 31. An area 135 indicates to a user a date which is to be input while a calendar area 136 is used to select the desired date. Having selected an appropriate date an OK button 137 is selected to cause redisplay of the job selection screen 127. A cancel button 138 is also provided. When appropriate date data has been input using the user entered date screen 134 the job selection screen 127 is again displayed.

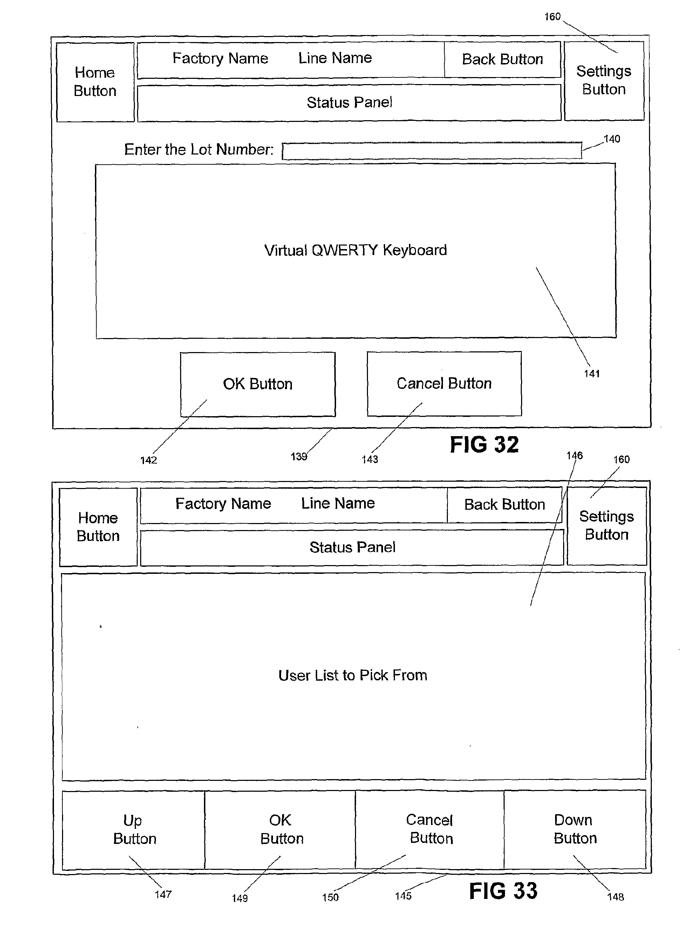

A job selected from the list of jobs 130 may require a user to input textual data. In such a case, a user entered batch/lot number screen 139 is displayed. This screen is shown in Figure 32, and the relationship between this screen and the job selection screen 127 is shown in Figure 28. It can be seen that the user entered batch/lot number screen 139 provides an area 140 into which text is input using a virtual QWERTY keyboard 141 displayed on the pod 8. When appropriate data is entered using the virtual QWERTY keyboard 141, this data appears in the area 140. An OK button 142 and a cancel button 143 are provided. When the OK button is selected 142, the job selection screen 127 is again displayed.

Additionally, some jobs selected from the list of jobs 130 may require a user to select a data item to be included within an image to be printed. In such a case, a pick list screen 145 is displayed as shown in Figure 33. This pick list screen 145 provides a pick list which a user navigates using an up button 147 and a down button 148 OK and cancel buttons 149, 150 are also provided. Thus, the job select screen 130 the user entered date screen 134 the user entered batch/lot number screen 139 and the pick list screen 145 together provide a user with an interface which can be used to select an image template and also to enter data required by that image template before printing operations take place.

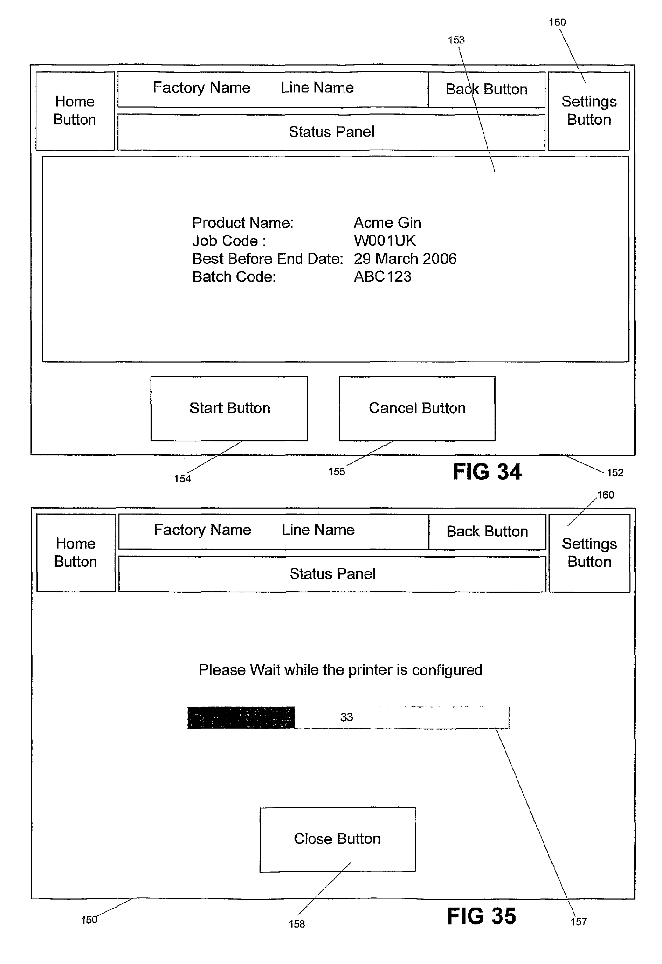

When a job selection operation is completed within the job selection screen 127 (Figure 30) a summary screen 152 is displayed. This relationship between the job selection screen 127 and the summary screen 152 shown in Figure 28. The summary screen 152 is shown in Figure 34. It can be seen that the summary screen 152 includes an area 153 presenting details of the selected job together with a start button 154 and a cancel button 155. If the cancel button is selected the home screen 120 is again displayed. If however the start button is selected, the image template is downloaded to the printer 6. This causes the display of a configuration screen 156 shown in Figure 35 which includes a status bar 157 indicating a quantity of data so far transferred to the printer. A close button 158 is also provided. When configuration is complete, the home screen 120 is again displayed as shown in Figure 28.

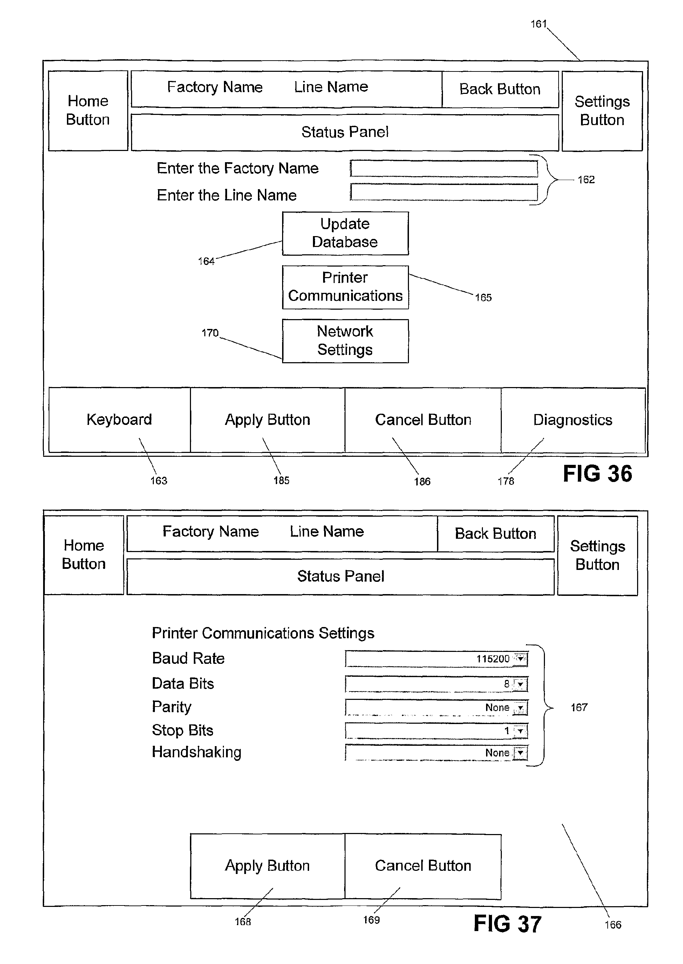

Referring back to Figures 29 to 35, it can be seen that in the top right hand corner of each screen a settings button 160 is provided. Selecting the settings button 160 from any of the described screens causes the display of a settings screen 161 shown in Figure 36. The settings screen is usable to configure a factory name and line name using text boxes 162, the entered data appearing in the first area 121 described with reference to Figure 29, and included in all described screens. Data is input to the textboxes 162 using a virtual QWERTY keyboard which is caused to be displayed by a keyboard button 163. An update database button 164 is useable in embodiments of the present invention in which the pod 8 receives image templates from a database (such as the embodiment illustrated in Figure 26). In such a case, the update database button 164 causes image templates to be downloaded from the print data server 17a to the pod 8. A printer communications button 165 is selectable to cause display of a printer settings screen 166 shown in Figure 37.

Referring to Figure 37, a plurality of dropdown boxes 167 are provided which are used to configure communications between the pod 8 and the printer 6. An apply button 168 and a cancel button 169 are provided to either accept or cancel changes made using this screen. Selecting either the apply button 168 or the cancel button 169 causes the settings screen 161 to be displayed again.

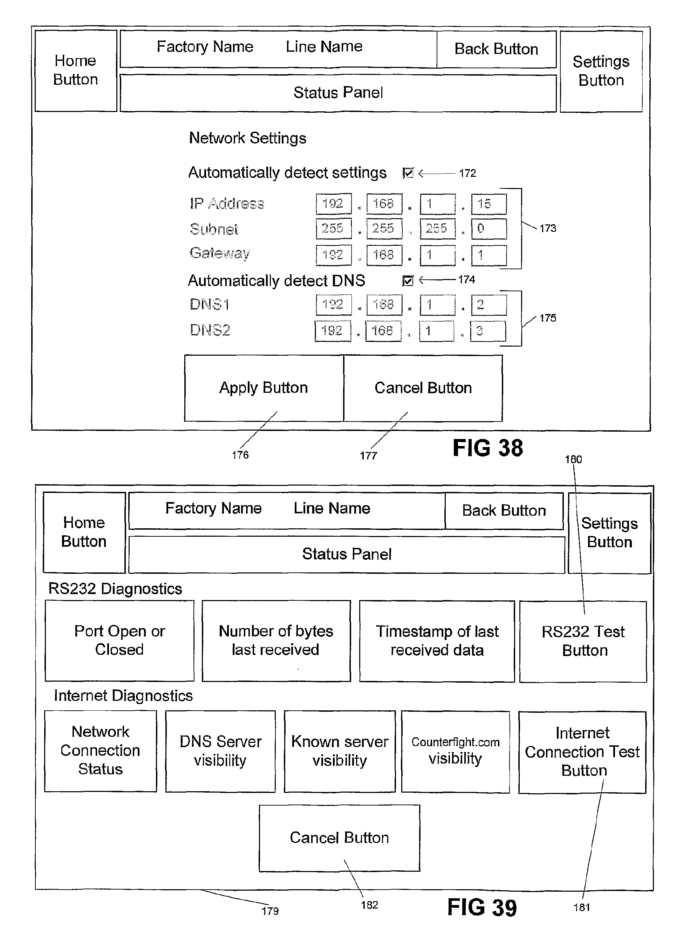

If the network settings button 170 of the settings screen 161 (Figure 36) is selected a screen 171 shown in Figure 38 is displayed. This screen allows various network connectivity parameters for the pod 8 to be specified. A checkbox 172 is provided indicating that IP address settings should be automatically detected. If this check box it not selected, IP address, subnet and gateway information is entered into appropriate textboxes 173. Similarly, a checkbox 174 is used to indicate whether DNS information should be automatically detected. If this box is not checked textboxes 175 are used to specify appropriate DNS data. Again, an apply button 176 and a cancel button 177 are provided, selection of these buttons causing the settings screen 161 to be displayed once again.

Referring again to Figure 36, a diagnostics button 178 is provided by the settings screen 161 and when selected this causes display of a diagnostics screen 179 shown in Figure 39. It can be seen that the diagnostics screen 179 includes a plurality of buttons to diagnose potential faults both in terms of RS232 communication between the pod 8 and the printer 6 and Internet communication involving the pod 8.

With regard to RS232 diagnostics the provided buttons collectively show whether the pod can open its RS232 port, whether the port is currently open or closed, and whether any data has been received, in addition to the time of last receipt of data and the number of bytes last received. A RS232 test button 180 causes the pod 8 to attempt to connect to the printer and transmit a status message, awaiting a response to that status message.

Internet diagnostics show whether the pod has a network connection, whether it can connect to a predetermined domain, whether it can see its DNS server and whether it can see a known webserver that is unlikely to be down (e.g. www.google.com or www.bbc.co.uk) pressing the Internet connection test button 181 causes the pod to attempt to connect to an upload server at the counterfight,com domain. If that fails it will attempt to connect to a public server that is unlikely to be unavailable (e.g. nasa.gov or google.com). If that fails then it will attempt to contact the DNS server. If that fails it will identify whether there is a network connection or not. The diagnostics screen 179 provides a cancel button which when selected causes the settings screen 161 to be again displayed.

Referring again to Figure 36 it can be seen that the settings screen 161 also includes an apply button 185 and a cancel button 186. These buttons cause the pod to again display the home screen 120 which has been described above.

The preceding description has described how an interface for the pod 8 can function in general terms. The specifically described interlace is a touch screen interface. It will however be appreciated that various modifications can be made to the user interface provided. It will also be appreciated that it is not necessary for the interface to be a touch screen interface. Instead, in some embodiments of the invention an alternative user interface may be provided.

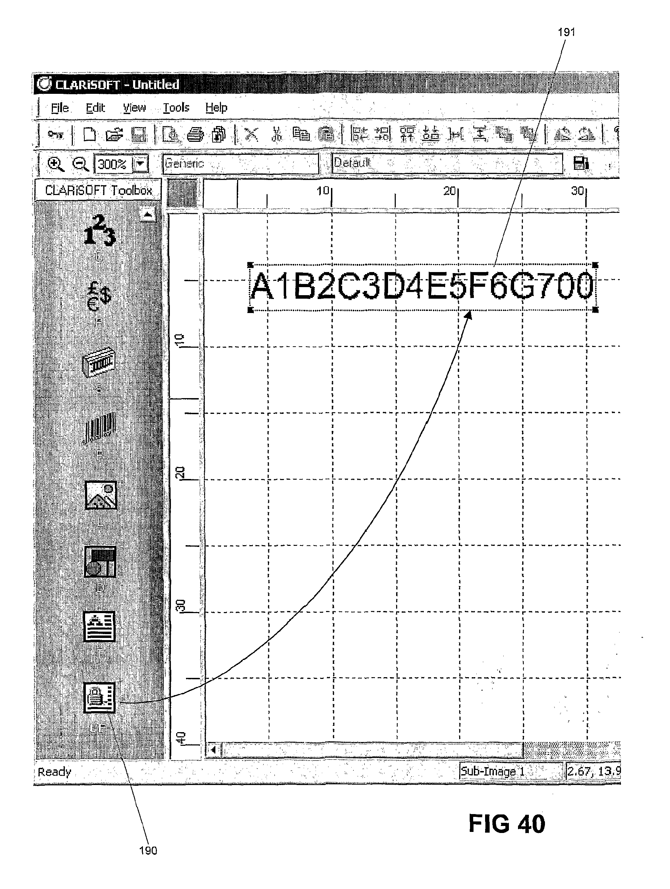

It has been described above that image templates are typically created on a desktop PC and provided to the pod 8. Figure 40 is a screenshot taken from an image template design package known as CLARiSOFT. produced by Claricom Limited of 4 William Lee Building, Highfields Science Park, University Boulevard, Nottingham, NG7 2RQ. In the illustrated screenshot, the CLARiSOFT user interface provides a button 190 which is selected to insert into an image template a security code field 191. When the button 190 is used to add a security code field to an image template a user is prompted to associate an other item of data included within the image template with the security code field. It is this other field which is to act as the public data. In this way, the user interface shown in Figure 41 provides a user with a convenient way of adding a security code of the type described above to an image template. Specifically, a single operation involving selecting the insertion of a security code and simply associating that with another field within the image template is provided. Additionally, using the interface of Figure 40 to generate image templates is considered to be advantageous given that it allows an image template to specify all required information relating to a security code, including its relationship with predefined public data. It is to be noted that the field which is to act as public data may take any convenient form. For example, this may be a field which is configured to receive data input by a user using an appropriate input device or alternatively data received from an external device. In preferred embodiments of the invention software is configured to only allow a security code field to be associated with a field which stores data which is constant for the entirety of a batch. It will be appreciated that the field associated with the security field, and more particularly the data stored therein will need to be uploaded to the database for verification purposes as described above.

Preferred embodiments of the present invention have been described above. It will however be appreciated that various modifications could be made to the described embodiments without departing from the sprit and scope of the present invention as defined by the appended claims. Where references have been made above to applying a security code to an item or product, such references are intended to include the direct application of a security code to an item or product by printing onto that item or product or alternatively to printing a security code onto packaging associated with that item or product. Alternatively, security codes may be printed onto labels which are already fixed to or are to be affixed to the product or item. The terms "product" and "item" are intended to be construed broadly so as to include anything with which a security code is to be associated. Although, in the majority of cases, such items and products are likely to be consumer items and products this is not necessarily be the case. It is currently believed that the application of security cases is particularly advantageous in relation to high value products as well as to tobacco and alcohol based products.

In the embodiments of the invention described above it has been exclaimed that a printer uses an image template including an insert field and that a pod associated with the printer provides insert data (in the form of encrypted data) to the printer to form part of the security code. Some printers in reasonably wide spread use are unable to accept such insert data items along a serial communications interface of the type described in the present application. In such cases, it may be necessary to replace processing set out above which refers to presenting new insert data with processing which provides a new image template, that template including an already populated field including what was otherwise to have been insert data.

Preferred methods of generating part of the security code using encryption have been described above. However, alternative methods can be used. Specifically, the methods described above involve encryption of private data known to a person generating a security code and subsequently stored in a database. However, in addition to such private data, public data which is to be printed on an item may additionally be encrypted. Suitable techniques for such encryption are described in WO00/23954 (Elliott) the contents of which are herein incorporated by reference.

It has been explained above that two part security codes of the general type illustrated in Figure 5 are preferably used in embodiments of the present invention, where a first component is generated by encrypting data at a pod and providing encrypted data to the printer, and a second component is generated by reading a counter value generated by the printer. It has been explained that operating in this way overcomes delays which may be imposed by presenting new insert data for each printing operation which is to take place. However, the use of two part security codes of the type described herein is not limited to such cases. Indeed, if a printer is itself configured to generate encrypted data which is to form part of a security code, the use of counter values may still be beneficial given that a printer will typically be able to generate a new counter value more quickly than it will be able to generate new encrypted data. Similarly, both first and second components may be transmitted to a printer from an external device. If a single first component is associated with a plurality of second components, unique data items can be generated by transmitting second component values relatively frequently and first component values relatively infrequently, In this way, unique data items can be provided to a printer without requiring that entire unique data items for each printing operation.

The pod 8 described above can take any convenient form. For example the pod 8 can be provided in the form a PC (e.g. a tablet PC) running suitable software.

Alternatively, the pod 8 can be provided using bespoke hardware. In alternative embodiments of the invention functionality described above with reference to the pod 8 is carried out within the printer 6. This can be achieved by providing the printer 6 with appropriate hardware and/or software configured to provide this functionality. In such an embodiment the communication between the modules of the printer which perform the pod's functions and the other modules of the printer would likely be communication between sections of electronic memory within the printer, rather than via an RS232 or similar serial communications link.

In the described embodiment, each of the printers 6, 10, 13 shown in Figure 1 has an associated pod 8, 11, 14. In alternative embodiments of the invention a single pod may be configured to control a plurality of printers.

Embodiments of the invention described above have made use of security codes and associated public data in the form of humanly readable information which is printed on a product or on packaging associated with a product. In alternative embodiments of the invention security codes and/or associated public data are provided in the form of machine readable information. Such machine readable information can be provided in the form of RFID tags or one-dimensional or two-dimensional barcodes. Such machine readable information is then read by an appropriate reader when a verification operation is to take place. It will be appreciated that providing security codes and/or public data in this way is advantageous in that it reduces the risk of input data errors. It does however require that a user carrying out a verification operation has access to an appropriate device to read the machine readable information.

Embodiments of the invention described above make use of the 3DES encryption algorithm. It will however be appreciated that any suitable encryption mechanism can be used. In some mechanisms, encryption keys of the type described above are not employed. Instead, encryption and decryption operations are specified by a set of rules indicating how data should be manipulated to achieve encryption or decryption. For example, one such set of rules may specify how bits of plain text data should be rearranged to provide encryption and may similarly specify how bits of encrypted data should be rearranged to provide the original plain text data.

Aspects of the invention are set out in the following numbered paragraphs.
1. A method for printing a security code, the method comprising:
   receiving at a printer a first component of said security code from an external data source;
   generating a second component of said security code at said printer; and
   printing said security code by printing said first and second components;
   wherein a common first component is associated with a plurality of distinct second components to print a plurality of security codes.
2. A method according to paragraph 1, wherein generating said second component comprises reading a value of a machine generated code.
3. A method according to paragraph 2, wherein said machine generated code is a counter value or a clock value held by said printer.
4. A method according to any preceding paragraph, further comprising:
   receiving a plurality of first components at said printer; and
   generating a plurality of second components at said printer;
   wherein second components are generated more frequently than said first components are received.
5. A method according to any preceding paragraph, wherein said first component is generated by encrypting first data to generate second data, said first component comprising said second data.
6. A method according to any preceding paragraph, wherein printing said security code comprises printing said second component as a suffix to said first component.
7. A method according to any one of paragraphs 1 to 5 wherein printing said security code comprises printing said second component as a prefix to said first component.
8. A method according to any one of paragraphs 1 to 5, wherein said first component comprises a plurality of characters, and wherein printing said security code comprises printing said second component between two adjacent characters of said first component.
9. A method according to any preceding paragraph, wherein each of said plurality of security codes is unique.
10. A method according to any preceding paragraph, further comprising providing each of said security codes to a data repository.
11. A method according to any preceding paragraph, further comprising storing data indicating second components associated with a particular first component.
12. A method according to any preceding paragraph, further comprising storing data indicating second components associated with first data used to generate a particular first component.
13. A method according to paragraph 12 as dependent upon paragraph 2, wherein storing data indicating second components associated with first data used to generate a particular first component comprises:
   reading a value of said machine generated code when each first component is provided to said printer; and
   generating data indicating a range of values of said second component associated with each first component based upon said value of said machine generated code.
14. A method according to paragraph 13, further comprising resetting said machine generated code after said reading.
15. A method according to paragraph 14, wherein:
   a first value of said machine generated code is read and reset before a first first component is provided to said printer;
   a second value of said machine generated code is read and reset before a second first component is provided to said printer; and
   values of said machine generated code associated with first data used to generate said first first component are determined by said second value.
16. A method according to paragraph 15, wherein said values of said machine generated code associated with first data used to generate said first first component are a range of values between zero and said second value.
17. A method according to paragraph 12 as dependent upon paragraph 2, wherein storing data indicating second components associated with first data used to generate a first value of said first component comprises:
   (a) reading a first value of said machine generated code;
   (b) transmitting said first value of said first component to said printer;
   (c) transmitting a second value of said first component to said printer;
   (d) reading a second value of said machine generated code;
   (e) associating values of said machine generated code determined by said first value of said machine generated code and said second value of said machine generated code with said first value of said first component.
18. A method according to paragraph 17, wherein step (c) further comprises:
   reading a third value of said machine generated code from said printer before transmitting said second value of said first component;
   and wherein the method further comprises:
      (f) transmitting a third value of said first component to said printer;
      (g) reading a fourth value of said machine generated code from said printer; and
      (h) associating values of said second component determined by said third value of said second component and said fourth value of said second component with said second value of said first component.
19. A method according to paragraph 17 or 18, wherein said values of said second component associated with said first value of said first component are a range of values bounded by said first and second values of said second component.
20. A method according to paragraph 18, wherein values of said second component associated with said second value of said first component are a range of values bounded by said third and fourth values of said second component.
21. A method according to any one of paragraphs 17 to 20, further comprising:
   subtracting said first value of said second component from said second value of said second component to determine a first number of values.
22. A method according to paragraph 21, wherein a data item for each of a plurality of counter values is stored, and the method further comprises:
   incrementing a data item associated with said first number when said first number of values is determined; and
   incrementing one or more data item associated with values less than said first number.
23. A method according to paragraph 21 or 22, wherein values of said second component associated with said first component are a range of values determined by said first value of said first component and said first number of values.
24. A method according to paragraph 18 or any paragraph dependent thereon, further comprising:
   subtracting said third value of said second component from said fourth value of said second component to determine a second number of values.
25. A method according to paragraph 24 as dependent upon paragraph 21, further comprising storing a maximum of said first and second number of values.
26. A method according to any one of paragraphs 17 to 25, wherein step (b) further comprises generating said first value of said first component, said first value of said first component being generated using said first value of said second component.
27. A method according to any one of paragraphs 17 to 26, further comprising delaying for a predetermined time period between steps (c) and (d)
28. A method according to any one of paragraphs 17 to 27, wherein step (b) further comprises: communicating with said printer to determine when said second value of said first component should be transmitted to said printer
29. A method according to paragraph 28, wherein said communicating comprises determining a number of printing operations carried out after transmission of said first value of said first component, and said second value of said first component is transmitted to said printer when a predetermined number of printing operations have been carried out.
30. A method according to paragraph 10 or any paragraph dependent thereon, wherein said external data source is connected to said data repository, and said external data source provides data to said data repository.
31. A method according to paragraph 30, wherein said external data source provides details of first data used to generate each first component and each associated second component to said data repository.
32. A method according to paragraph 30 or 31, wherein said external data source provides details of each first component and each associated second component to said data repository
33. A method according to any one of paragraphs 30 to 32, wherein said external data source provides data to said data repository via a local area network.
34. A method according to any one of paragraphs 30 to 33, wherein said external data source provides data to said data repository via the Internet.
35. A method according to any preceding paragraph, wherein said first component comprises an encrypted form of a value of said second component.
36. A data carrier carrying computer readable program code means for causing a computer to carry out a method according to any preceding paragraph.
37. An apparatus for printing a data item, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 1 to 35.
38. A printer for printing a security code, the printer comprising:
   an interface configured to receive a first component of said security code from an external data source;
   a processor configured to generate a second component of said security code at said printer; and
   a printhead for printing said security code by printing said first and second components, wherein the printer is configured to associate a common first component with a plurality of distinct second components to print a plurality of security codes.
39. Apparatus for printing a security code, the apparatus comprising:
   means for receiving a first component of said security code from an external data source;
   means for generating a second component of said security code; and
   means for printing said security code by printing said first and second components;
   wherein the apparatus is configured to associate a common first component with a plurality of distinct second components to print a plurality of security codes.
40. Apparatus for marking an object with a security code, the apparatus comprising:
   means for receiving a first component of said security code from an external data source;
   means for generating a second component of said security code; and
   means for marking said object with said security code by marking said object with said first and second components;
   wherein the apparatus is configured to associate a common first component with a plurality of distinct second components to mark a plurality of security codes.
41. A method for marking an object with a security code, the method comprising:
   receiving at a marking device a first component of said security code from an external data source;
   generating a second component of said security code at said marking device; and
   marking said object with said security code by marking said object with said first and second components;
   wherein a common first component is associated with a plurality of distinct second components to mark a plurality of security codes.
42. A method for providing data to a printer configured to print a security code, the method comprising:
   transmitting to a printer a first component of said security code, said printer being configured to generate a second component of said security code and to print said security code by printing said first and second components;
   wherein the printer is configured to associate a common first component with a plurality of distinct second components to print a plurality of security codes.
43. A method according to paragraph 42 further comprising:
   receiving data from said printer, said data indicating second components associated with a particular first component.
44. A method according to paragraph 42 or 43, further comprising encrypting data to generate said first component.
45. A method according to any of paragraphs 42 to 44, further comprising storing data indicating second components associated with a particular first component.
46. A method according to any of paragraphs 42 to 44, further comprising storing data indicating second components associated with first data used to generate a particular first component.
47. A method according to paragraph 46, wherein said second component is a value of a machine generated code and storing data indicating second components associated with first data used to generate a particular first component comprises:
   reading a value of said machine generated code when each first component is provided to said printer; and
   generating data indicating a range of values of said machine generated code which form second components associated with each first component.
48. A method according to any of paragraphs 42 to 44, further comprising:
   (a) reading a first value of a second component of said security code from said printer;
   (b) transmitting a first value of a first component of said security code to said printer;
   (c) transmitting a second value of a first component of said security code to said printer;
   (d) reading a second value of said second component from said printer;
   (e) associating values of said second component determined by said first value of said second component and said second value of said second component with said first value of said first component.
49. A data carrier carrying computer program code means for causing a computer to carry out a method according to any one of paragraphs 42 to 48.
50. An apparatus for providing data to a printer, the apparatus comprising
   a program memory storing processor readable instructions; and
   a processor configured to read and execute instructions stored in said program memory;
   wherein said processor readable instructions comprise instructions configured to cause said apparatus to carry out a method according to any one of paragraphs 42 to 48.
51. Apparatus for providing data to a printer configured to print a security code, the apparatus comprising:
   means for transmitting to a printer a first component of said security code, said printer being configured to generate a second component of said security code, to print said security code by printing said first and second components, and to associate a common first component with a plurality of distinct second components to print a plurality of security codes.
52. A controller configured to provide data to a printer configured to print a security code, the controller comprising:
   an interface for transmitting to a printer a first component of said security code, said printer being configured to generate a second component of said security code, to print said security code by printing said first and second components, and to associate a common first component with a plurality of distinct second components to print a plurality of security codes.
53. A method for printing a security code, the method comprising:
   generating a first component of said security code at a printer;
   generating a second component of said security code at said printer using a value of a machine generated code; and
   printing said security code by printing said first and second components,;
   wherein said first component is generated by encrypting first data to generate second data, said first component comprising said second data, and wherein a common first component is associated with a plurality of distinct second components to print a plurality of security codes.
54. A method according to paragraph 53, wherein said machine generated code is a counter value or a clock value held by said printer.
55. A method according to paragraph 53, further comprising:
   generating a plurality of first components at said printer;
   generating a plurality of second components at said printer;
   wherein second components are generated more frequently than said first components are generated.
56. A method according to any one of paragraphs 53 to 55, wherein each of said plurality of security codes is unique.
57. A method according to any one of paragraphs 53 to 56, further comprising storing data indicating second components associated with first data used to generate a particular first component.
58. A method according to paragraph 57, wherein storing data indicating second components associated with first data used to generate a particular first component comprises:
   reading a value of said machine generated code when each first component is generated; and
   generating data indicating a range of values of said second component associated with each first component based upon said value of said machine generated code.
59. A method according to paragraph 58, further comprising resetting said machine generated code after said reading.
60. A method according to paragraph 59, wherein:
   a first value of said machine generated code is read and reset before a first first component is generated;
   a second value of said machine generated code is read and reset before a second first component is generated; and
   values of said machine generated code associated with first data used to generate said first first component are determined by said second value.
61. A method according to paragraph 60, wherein said values of said machine generated code associated with first data used to generate said first first component are a range of values between zero and said second value.
62. A printer for printing a security code, the printer comprising:
   a processor configured to:
      generate a first component of said security code by encryption, and
      generate a second component of said security code using a value of a machine generated code; and
   a print head for printing said security code by printing said first and second components,
   wherein the printer is configured to associate a common first component with a plurality of distinct second components to print a plurality of security codes.
63. Apparatus for printing a security code, the apparatus comprising:
   means for generating at a printer a first component of said security code by encryption;
   means for generating a second component of said security code at said printer using a value of a machine generated code; and
   means for printing said security code by printing said first and second components;
   wherein the apparatus is configured to associate a common first component with a plurality of distinct second components to print a plurality of security codes.
64. A method for generating a security code comprising first and second components, the method comprising:
   (a) reading a first value of a second component of said security code from a second memory;
   (b) transmitting a first value of a first component of said security code to a first memory;
   (c) transmitting a second value of a first component of said security code to said first memory;
   (d) reading a second value of said second component from said second memory; and
   (e) associating values of said second component determined by said first value of said second component and said second value of said second component with said first value of said first component.
65. A method according to paragraph 64, wherein step (c) further comprises:
   reading a third value of said second component from said second memory before transmitting said second value of said first component;
   and wherein the method further comprises:
      (f) transmitting a third value of said first component to said first memory;
      (g) reading a fourth value of said second component from said second memory; and
      (h) associating values of said second component determined by said third value of said second component and said fourth value of said second component with said second value of said second first component.
66. A method according to paragraph 64 or 65, wherein reading values of said second component from said second memory comprises:
   reading data from said second memory; and
   deriving said values of said second component from said data.
67. A method according to paragraph 64, 65 or 66, wherein said first and second memories are provided by a printing device.
68. A method according to paragraph 67, wherein said reading and transmitting are carried out from a device external to said printing device.
69. A method according to paragraph 67, wherein said reading and said transmitting are carried out internally within said printing device.
70. A method according to paragraph 67, 68 or 69, wherein values of said second component are generated by said printing device.
71. A method according to any one of paragraphs 64 to 70, wherein values of said second component are counter values.
72. A method according to paragraph 71, wherein said values of said second component associated with said first value of said first component are a range of values bounded by said first and second values of said second component.
73. A method according to paragraph 72 as dependent upon paragraph 75, wherein values of said second component associated with said second value of said first component are a range of values bounded by said third and fourth values of said second component.
74. A method according to any one of paragraphs 64 to 73, further comprising:
   subtracting said first value of said second component from said second value of said second component to determine a first number of values.
75. A method according to paragraph 74, wherein a data item for each of a plurality of counter values is stored, and the method further comprises:
   incrementing a data item associated with said first number; and
   incrementing one or more data item associated with values less than said first number.
76. A method according to paragraph 74 or 75, wherein values of said second component associated with said first component are a range of values determined by said first value of said first component and said first number of values.
77. A method according to paragraph 65 or any paragraph dependent thereon, further comprising:
   subtracting said third value of said second component from said fourth value of said second component to determine a second number of values.
78. A method according to paragraph 77 as dependent upon paragraph 74, storing a maximum of said first and second number of values.
79. A method according to any one of paragraphs 64 to 78, wherein step (b) further comprises generating said first value of said first component, said first value of said first component being generated using said first value of said second component.
80. A method according to any one of paragraphs 64 to 79, further comprising delaying for a predetermined time period between steps (c) and (d)
81. A method according to any one of paragraphs 64 to 80, wherein step (b) further comprises: communicating with said printer to determine when said second value of said first component should be transmitted to said printer
82. A method according to paragraph 81, wherein said communicating comprises determining a number of printing operations carried out after transmission of said first value of said first component, and said second value of said first component is transmitted to said printer when a predetermined number of printing operations have been carried out.
83. A data carrier carrying computer readable program code means for causing a computer to carry out a method according to any one of paragraphs 64 to 82.
84. An apparatus for generating a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 64 to 82.
85. Apparatus for generating a security code comprising first and second components, the method comprising:
   means for reading a first value of a second component of said security code from a second memory;
   means for transmitting a first value of a first component of said security code to a first memory;
   means for transmitting a second value of a first component of said security code to said first memory;
   means for reading a second value of said second component from said second memory; and
   means for associating values of said second component determined by said first value of said second component and said second value of said second component with said first value of said first component.
86. A marking device configured to generate a security code comprising first and second components, the marking device comprising a processor configured to:
   (a) read a first value of a second component of said security code from a second memory;
   (b) transmit a first value of a first component of said security code to a first memory;
   (c) transmit a second value of a first component of said security code to said first memory;
   (d) read a second value of said second component from said second memory; and
   (e) associate values of said second component determined by said first value of said second component and said second value of said second component with said first value of said first component.
87. A method for generating a security code comprising first and second components, wherein a particular first component is to be associated with a plurality of values of said second component, the method comprising:
   receiving a first value of said second component; and
   encrypting said first value of said second component to generate a value for said first component.
88. A method according to paragraph 87, wherein said second component is a counter component.
89. A method according to paragraph 88, wherein said first value of said second component is an initial counter value associated with said generated first component.
90. A data carrier carrying computer readable program code means for causing a computer to carry out a method according to any one of paragraphs 87 to 89.
91. An apparatus for generating a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 87 to 89.
92. A method of verifying a security code, said security code comprising a counter component, the method comprising:
   identifying a data item associated with a value of said counter component, said data item representing a number of generated security codes having said value of said counter component;
   validating said data item; and
   if said validation is successful generating data representing successful validation and modifying said data item;
   if said validation is unsuccessful generating data representing unsuccessful validation.
93. A method according to paragraph 92, wherein identifying a data item associated with a value of said counter component comprises determining an offset value of said counter component from an initial value, and identifying a data item associated with said offset.
94. A method according to paragraph 92, wherein identifying a data item associated with a value of said counter component comprises identifying a data item directly associated with said value of said counter component.
95. A method according to paragraph 92, 93 or 94, wherein said data item is a number of generated security codes having said value of said counter components.
96. A method according to paragraph 92, 93, 94 or 95, wherein modifying said data item comprises decrementing said data value.
97. A data carrier carrying computer readable program code means for causing a computer to carry out a method according to any one of paragraphs 92 to 96.
98. An apparatus for generating a security code, the apparatus comprising:
   a program memory storing processor readable instructions; and
   a processor configured to read and execute instructions stored in said program memory;
   wherein said processor readable instructions comprise instructions configured to cause said apparatus to carry out a method for verifying a security code according to any one of paragraphs 92 to 96.
99. A method of generating a database for use in verifying security codes, each security code comprising a first component and a second component, the second component being a counter component, and the method comprising:
   defining respective data items for at least some values of said counter component;
   generating a plurality of security codes having common first components and differing counter components;
   updating data items based upon values of said counter component.
100. A method according to paragraph 99, wherein said differing counter components define a range of counter components, and updating data items comprises updating data items determined by said range.
101. A method according to paragraph 100, wherein updating data items comprises updating data items associated with values within said range.
102. A method according to paragraph 100, wherein said range of values comprises a number of counter values, and updating data items comprises updating data items based upon said number of counter values.
103. A method according to paragraph 102, wherein updating data items comprises updating data items associated with said counter value and values less than said counter value.
104. A method according to any one of paragraphs 99 to 103 wherein updating data items comprises incrementing values of said data items.
105. A data carrier carrying computer readable program code means for causing a computer to carry out a method according to any one of paragraphs 99 to 104.
106. An apparatus for generating a database, the apparatus comprising:
   a program memory storing processor readable instructions; and
   a processor configured to read and execute instructions stored in said program memory;
   wherein said processor readable instructions comprise instructions configured to cause said apparatus to carry out a method for verifying a security code according to any one of paragraphs 99 to 104.
107. A method of verifying a security code, the method comprising:
   processing said security code to generate a first component and a second component; processing said first component to produce a first value of said second component; and
   verifying said second component based upon said first value of said second component.
108. A method according to paragraph 107, further comprising:
   reading data from a database indicating valid values for said second component;
   determining whether said read data indicates that said second component is valid.
109. A method according to paragraph 107 or 108, further comprising:
   reading from a database a number of values of said second component;
   generating a range of valid values of said second component, said range being generated using said first value of said second component and said number of values of said second component;
   verifying said security code by determining whether said second component has a value within said range of valid values.
110. A method according to any one of paragraphs 107 to 109, further comprising verifying said first component.
111. A method according to paragraph 110, wherein said first component is verified independently of said second component.
112. A method according to paragraph 110 or 111, wherein verifying said first component comprises decrypting said first component.
113. A method according to any one of paragraphs 107 to 109, wherein processing said first component comprises decrypting said first component.
114. A method according to paragraph 113 further comprising verifying said first component based upon an output of said decrypting.
115. A data carrier carrying computer readable program code with means for causing a computer co carry out a method according to any one of paragraphs 107 to 114.
116. An apparatus for verifying a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 107 to 114.
117. A method of decrypting a security code associated with a product, the method comprising:
   receiving as input data associated with said product, said data identifying a batch with which said product is associated;
   receiving as input said security code;
   retrieving decryption means associated with said data; and
   decrypting at least part of said security code using said retrieved decryption means to generate decrypted data.
118. A method according to paragraph 117, wherein said decryption means comprises a decryption key.
119. A method according to paragraph 117, wherein said decryption means comprises at least one decryption rule.
120. A method according to paragraph 117, 118 or 119, further comprising:
   verifying said decrypted data using stored data; and
   generating data indicating the result of said verifying.
121. A method according to any one of paragraphs 117 to 120, wherein said batch is a sub-batch.
122. A method according to any one of paragraphs 117 to 121, wherein said data associated with said product is a date.
123. A method according to paragraph 122, wherein said date is a date of production of said product or a best before date or a use by date or a display until date.
124. A method according to any one of paragraphs 116 to 123, wherein said security code and said data are encoded on said product.
125. A method according to any one of paragraphs 117 or 124, wherein said security code and said data are printed on said article.
126. A method according to any one of paragraphs 117 to 125, wherein said security code and said data are printed on packaging of said product.
127. A method according to paragraph 120 or any paragraph dependent thereon, wherein verifying said decrypted data comprises comparing at least part of said decrypted data with a second data item associated with said data and said decryption means.
128. A method according to paragraph 127, wherein said data comprises a first data item, and said first data item, said second data item and said decryption means are stored in a database.
129. A method according to paragraph 128, wherein said database stores a plurality of first data items, each first data item being associated with a respective decryption means and a respective second data item.
130. A method according to any one of paragraphs 117 to 129, wherein said security code is generated by encrypting initial data using encryption means.
131. A method according to paragraph 130, wherein said encryption means and said decryption means are equal.
132. A method according to paragraph 130, wherein said encryption means and said decryption means are different.
133. A method according to any one of paragraphs 117 to 132, wherein said security code comprises first and second components, and said first component of said security code is decrypted using said retrieved decryption means to generate said decrypted data.
134. A method according to paragraph 133, wherein said second component is a counter value, and the method further comprises verifying said counter value.
135. A method according to paragraph 134, wherein verifying said counter value comprises:
   obtaining data indicating valid counter values; and
   determining whether the counter value of said second component is a valid counter value.
136. A method according to paragraph 135, wherein said data indicating valid counter values indicates a number of valid counter values, and the method further comprises:
   obtaining an initial counter value; and
   calculating a range of counter values by adding said number of counter values to said initial counter value,
   wherein determining whether the counter value of said second component is a valid counter value comprises determining whether said counter value lies within said range.
137. A method according to paragraph 136, wherein said initial counter value is obtained from part of said decrypted data.
138. A method according to any one of paragraphs 133 to 137, wherein a plurality of security codes comprise common first component values and differing second component values.
139. A method according to paragraph 134 or any paragraph dependent thereon, wherein an instance data item associated with at least some counter values is stored, and said verifying said counter value comprises determining whether a respective instance data item satisfies a predetermined criterion.
140. A method according to paragraph 139, wherein each instance data item indicates a number of instances of said counter value, and determining whether the respective instance data item satisfies a predetermined criteria comprises:
   determining whether said respective instance data item has a value greater than zero; and
   decrementing said respective instance data item in the event that said instance data value has a value greater than zero.
141. A method according to paragraph 139 or 140, wherein each instance data item is associated with a counter value expressed as an offset from an initial counter value.
142. A method according to paragraph 134 or any paragraph dependent thereon, wherein a plurality of security codes have been applied to a plurality of products, each security code including respective first and second components, wherein at least two first components have differing numbers of counter values associated with them, but common data is stored for both first components indicating a number of valid counter values.
143. A method according to any one of paragraphs 117 to 142, further comprising:
   determining whether an input security code has been verified previously; and
   if said security code has been verified previously, reporting duplicate verification to a user.
144. A method according to any one of paragraphs 117 to 143, further comprising storing data indicating a verification operation on the input security code.
145. A method according to any one of paragraphs 117 to 144, wherein receiving said data and said security code comprises receiving said data and said security code at a server, said data and said security code being provided to said server from a client over a computer network.
146. A method according to any one of paragraphs 117 to 145, wherein retrieving said decryption means comprises retrieving first and second decryption means associated with said first data item, the method further comprising:
   decrypting said security code using said first decryption means, to generate first decrypted data;
   verifying said fist decrypted data; and
   if said first decrypted data does not verify, decrypting said security code using said second decryption means to generate second decrypted data and verifying said second decrypted data.
147. A data carrier carrying computer readable program code means for causing a computer to carry out a method according to any one of paragraphs 117 to 146.
148. An apparatus for verifying a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 117 to 146.
149. A method of verifying a security code comprising:
   transmitting said security code and data associated with a product, the data identifying a batch with which said product is associated, to a server, the server being configured to receive as input the data associated with the product and said security code, to retrieve decryption means associated with said data, to decrypt at least part of said security code using said retrieved decryption means to generate decrypted data and to verify said decrypted data using stored data;
   receiving data from said server indicating a result of said verification; and
   displaying data to a user indicating said result of said verification.
150. A method according to paragraph 149, wherein said decryption means comprises a decryption key.
151. A method according to paragraph 149, wherein said decryption means comprises at least one decryption rule.
152. A method according to paragraph 149, 150 or 151, wherein said security code and said data are encoded on said product.
153. A method according to paragraph 149, 150, 151 or 152, wherein said security code and data are printed on said product.
154. A method according to any one of paragraphs 149 to 153 wherein said security code and said data are printed on packaging of said product.
155. A method of verifying a security code comprising:
   transmitting a data associated with a product and said security code from a client to a server, said data identifying a batch with which said product is associated;
   receiving said data and said security code at said server from said client;
   retrieving decryption means associated with said data at said server;
   decrypting at least part of said security code using said retrieved decryption means to generate decrypted data at said server;
   verifying said decrypted data using stored data at said server;
   generating data indicating the result of said verification at said server;
   transmitting data indicating the result of said verification to said client from said server;
   receiving data indicating the result of said verification at said client; and
   displaying data indicating the result of said verification at said client.
156. A method according to paragraph 155, wherein said decryption means comprises a decryption key.
157. A method according to paragraph 155, wherein said decryption means comprises at least one decryption rule.
158. A method according to any one of paragraphs 155 to 157, wherein said security code and said data are encoded on said product.
159. A method according to any one of paragraphs 155 to 157, wherein said security code and said data are printed on said product.
160. A method according to any one of paragraphs 155 to 159, wherein said security code and said data are printed on packaging of said product.
161. A method according to any one of paragraphs 155 to 160, wherein verifying said decrypted data comprises comparing at least part of said decrypted data with a second data item associated with said data and said decryption means.
162. A method according to paragraph 161, wherein said data comprises a first data item, and said first data item, said second data item and said decryption means are stored in a database, said database being accessed by said server.
163. A method according to paragraph 162, wherein said database stores a plurality of first data items, each first data item being associated with a respective decryption means and a respective second data item.
164. A method according to any one of paragraphs 155 to 163, wherein said security code comprises first and second components, and said first component of said security code is decrypted at said server using said retrieved decryption means.
165. A method according to paragraph 164, wherein said second component is a counter value, and the method further comprises verifying said counter value at said server.
166. A method according to paragraph 165, wherein verifying said counter value comprises:
   obtaining data indicating valid counter values; and
   determining whether the counter value of said second component is a valid counter value.
167. A method according to paragraph 166, wherein said data indicating valid counter values indicates a number of valid counter values, the method further comprising:
   obtaining an initial counter value; and
   calculating a range of counter values by adding said number of counter values to said initial counter value,
   wherein determining whether the counter value of said second component is a valid counter value by determining whether said counter value lies within said range.
168. A method according to paragraph 167, wherein said initial counter value is obtained from part of said decrypted data.
169. A method according to any one of paragraphs 165 to 168, wherein an instance data item associated with each counter value is stored, wherein said verifying comprises determining whether a respective instance data item satisfies a predetermined criteria.
170. A method according to paragraph 169, wherein each instance data item indicates a number of instances of said counter value, and determining whether the respective instance data item satisfies a predetermined criteria comprises:
   determining whether said respective instance data item has a value greater than zero; and
   decrementing said respective instance data item in the event that said instance data value has a value greater than zero.
171. A method according to any one of paragraphs 165 to 170, wherein a plurality of security codes have been applied to a plurality of products, each security code including respective first and second components, wherein at least two first components have differing numbers of counter values associated with them, but common data is stored for both first components indicating a number of valid counter values.
172. A method according to any one of paragraphs 155 to 171, further comprising:
   determining at the server whether an input security code has been verified previously;
   if said security code has been verified previously, transmitting data reporting duplicate verification to the client; and
   displaying data indicating duplicate verification to a user at the client.
173. A method according to any one of paragraphs 155 to 172, further comprising storing data indicating a verification operation on the input security code.
174. A method according to any one of paragraphs 155 to 173, further comprising retrieving first and second decryption means associated with said first data item, the method further comprising:
   decrypting said security code using said first decryption means, to generate first decrypted data;
   verifying said fist decrypted data; and
   if said first decrypted data does not verify, decrypting said security code using said second decryption means to generate second decrypted data and verifying said second decrypted data.
175. A data carrier carrying computer readable program code means for causing a computer to carry out a method according to any of paragraphs 155 to 174.
176. An apparatus for verifying a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any of paragraphs 155 to 174.
177. A method of generating a security code, the method comprising:
   encrypting initial data using encryption means to generate the security code;
   associating decryption means with data associated with a product, the data identifying a batch with which said product is associated, said decryption means being usable to decrypt at least part of said security code to generate said initial data; and
   storing said decryption means in association with said data.
178. A method according to paragraph 177, wherein said decryption means comprises a decryption key.
179. A method according to paragraph 177, wherein said decryption means comprises at least one decryption rule.
180. A method according to paragraph 177, 178 or 179, further comprising encoding said security code and said data on said article.
181. A method according to any one of paragraphs 177 to 180, further comprising printing said security code and said first data item on said article.
182. A method according to paragraph 180, further comprising printing said security code and said data on packaging of said article.
183. A method according to any one of paragraphs 177 to 182, wherein said encryption means and said decryption means are equal.
184. A method according to any one of paragraphs 177 to 182, wherein said encryption means and said decryption means are different.
185. A method according to any one of paragraphs 177 to 184, wherein said security code is generated by encrypting at least a second data item, the method further comprising storing said first data item, said second data item and said decryption means in a database.
186. A method according to any one of paragraphs 177 to 185, wherein said initial data item comprises data indicating at least one of a date and time on which processing for a batch of products began.
187. A method according to any one of paragraphs 177 to 186, wherein said initial data item comprises data associated with an article.
188. A method according to paragraph 187, wherein said initial data comprises data printed on said article.
189. A method according to any one of paragraphs 177 to 188, wherein said security code comprises first and second components, and said first component of said security is generated by said encryption.
190. A method according to paragraph 189, wherein said second component is a counter value.
191. A method according to paragraph 190, wherein a plurality of security codes comprise equal first components and different second components.
192. A method according to paragraph 190 or 191, wherein said initial data comprises an initial counter value.
193. A method according to paragraph 192, further comprising storing data indicating a number of counter values associated with a first component.
194. A method according to paragraph 193, wherein a first first component is associated with a first plurality of counter values and a second first component is associated with a second greater number of counter values and the method comprises storing said second number of counter values.
195. A method according to any one of paragraphs 190 to 194, wherein an instance data item associated with each counter value is stored, and an appropriate instance data item is modified to indicate associated of counter items with a first data item.
196. A method according to paragraph 190 or 195, wherein each instance data item is associated with a counter value expressed as an offset from an initial counter value.
197. A method according to any one of paragraphs 189 to 196, wherein a plurality of security codes are applied to a plurality of products, each security code including respective first and second components, wherein at least two first components have differing numbers of counter values associated with them, but common data is stored for both first components indicating a number of valid counter values.
198. A method according to any one of paragraphs 189 to 197, wherein the method further comprises:
   receiving at a printer said first component of said security code from an external data source;
   generating said second component of said data item at said printer; and
   printing said data item by printing said first and second components.
199. A method according to paragraph 198, wherein generating said second component comprises reading a value of a machine generated code.
200. A method according to paragraph 199, wherein said machine generated code is a counter value or a clock value held by said printer.
201. A method according to paragraph 189 or any paragraph dependent thereon, wherein printing said security code comprises printing said second component as a suffix to said first component.
202. A method according to paragraph 189 or any paragraph dependent thereon, wherein printing said data item comprises printing said second component as a prefix to said first component.
203. A data carrier carrying computer readable program code means for causing a computer to carry out a method according to any one of paragraphs 177 to 202.
204. An apparatus for generating a security code, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 177 to 202.
205. Apparatus for generating security codes, the apparatus comprising:
   means for encrypting initial data using encryption means to generate a security code;
   means for associating decryption means with data associated with a product the data identifying a batch with which said product is associated, and said decryption means being usable to decrypt at least part of said security code to generate said initial data; and
   means for storing said decryption means in association with said first data item.
206. A system for generating security codes, the system comprising:
   a processor configured to encrypt initial data using encryption means to generate a security code;
   a storage device configured to store decryption means in association with a data associated with a product, the data identifying a batch with which said product is associated, said decryption means being usable to decrypt at least part of said security code to generate said initial data.
207. A method of validating data, said data being associated with a plurality of operations carried out by a predetermined system, the method comprising:
   obtaining data from said predetermined system representing a number of operations carried out;
   obtaining data from a database representing a number of operations carried out;
   determining whether said data obtained from said predetermined system and said data obtained from said database satisfy a predetermined relationship.
208. A method according to paragraph 207, wherein said database comprises a table including a plurality of rows, each row being associated with a job and including a number of operations associated with that job, and wherein obtaining data from said database comprises:
   obtaining data representing a number of operations associated with each job carried out by said system; and
   summing the number of operations associated with each job associated with said system to generate said data representing said number of operations carried out.
209. A method according to paragraph 208, wherein said plurality of rows in said database table collectively represent operations carried out by a plurality of systems and obtaining data representing a number of printing operations associated with each job carried out by said predetermined system comprises querying said database to identify rows representing jobs carried out by said predetermined system.
210. A method according to paragraph 209, wherein said querying is based upon an identifier of said predetermined system.
211. A method according to paragraph 210, where said identifier of said system is a MAC address.
212. A method according to any one of paragraphs 207 to 211, wherein said database comprises a table including a plurality of rows, each row being associated with a respective system and including a number of operations associated with that system, and wherein obtaining data from said database comprises:
   querying said database table to retrieve data indicating a number of jobs carried out by the system.
213. A method according to any one of paragraphs 207 to 212 wherein said jobs are print jobs, each print job being associated with a production batch.
214. A method according to any one of paragraphs 207 to 213, wherein said operations are printing operations.
215. A method according to any one of paragraphs 207 to 214, wherein said system is a printer.
216. A method according to any one of paragraphs 207 to 215, wherein said system is a computing device associated with a printer.
217. A method according to any one of paragraphs 207 to 216, wherein obtaining data from said predetermined system representing a number of operations carried out comprises:
   receiving first data indicating said number of operations carried out;
   receiving second data indicating a number of operations carried out for which data has not yet been stored in said database; and
   subtracting said second data from said first data to generate result data.
218. A method according to paragraph 217, wherein said determining is based upon said data stored in said database and said result data.
219. A method according to any one of paragraphs 207 to 218, wherein said operations comprise generation of a security code.
220. A data carrier carrying computer readable program code means for causing a computer to carry out a method according to any one of paragraphs 207 to 219.
221. An apparatus for validating data, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 207 to 219.
222. Apparatus for validating data, said data being associated with a plurality of operations carried out by a predetermined system, the method comprising:
   means for obtaining data from said predetermined system representing a number of operations carried out;
   means for obtaining data from said database representing a number of operations carried out;
   means for determining whether said data obtained from said predetermined system and said data obtained from said database satisfy a predetermined relationship.
223. A method of generating an image template defining a layout of print data, the image template including a first field associated with a security code, and a second field associated with a first data item, the second field being adapted to receive data to populate said second field with data to be printed in a printed image based upon said image template, the method comprising:
   generating data stored in said image template representing an association between said first field and said second field.
224. A method according to paragraph 223, further comprising:
   populating said second field to generate said printed image;
   storing an association between data populating said second field and data associated with said security code.
225. A method according to paragraph 223 or 224, further comprising processing said image template and storing data populating said first field and data populating said second field in a database.
226. A method according to any one of paragraphs 223 to 225, comprising adding said first field to said image template using a graphical user interface, said graphical user interface being configured to prompt a user to input data representing said association with said second field.
227. A data carrier carrying computer readable program code means for causing a computer to carry out a method according to any one of paragraphs 223 to 226.
228. An apparatus for generating an image template, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 223 to 226.
229. A method for configuring a database used to verify security codes applied to products wherein the database stores data associated with said security codes for use in verification operations, the method comprising:
   receiving a plurality of data sets, each data set comprising data associated with security codes applied to a respective batch of products;
   storing each of said plurality of data sets in said database;
   providing details identifying at least some of said batches;
   receiving input data in response to said providing, said input data indicating whether verification operations for particular batches are to be enabled;
   storing data in said database based upon said input data.
230. A method according to paragraph 229, further comprising notifying a user of receipt of at least some of said plurality of datasets.
231. A method according to paragraph 229 or 230, wherein verification operations are disabled until user input is received.
232. A method according to paragraph 229, 230 or 231, wherein verification operations are enabled until user input is received.
233. A method according to any one of paragraphs 229 to 232, wherein providing details identifying at least some of said batches comprises providing details using a website.
234. A method according to paragraph 234, wherein receiving input data in response to said providing, comprises receiving input data via said website.
235. A data carrier carrying computer readable program code means for causing a computer to carry out a method according to any one of paragraphs 229 to 234.
236. An apparatus for generating an image template, the apparatus comprising:
   a program memory storing processor readable instructions; and
   a processor configured to read and execute instructions stored in said program memory;
   wherein said processor readable instructions comprise instructions configured to cause said apparatus to carry out a method according to any one of paragraphs 229 to 234.
237. Apparatus for decrypting a security code, the apparatus comprising:
   means for receiving as input a first data item and said security code;
   means for retrieving decryption means associated with said first data item; and
   means for decrypting at least part of said security code using said retrieved decryption means to generate decrypted data.
238. A method of controlling access to a database from a plurality of devices, the method comprising:
   storing data identifying said plurality of devices;
   providing said data to a user;
   receiving user input indicating whether data transmitted to said database by a specified device is to be allowed;
   wherein said plurality of devices are printing devices or computing devices controlling printing devices.
239. A method for printing a plurality of data items, each data item comprising first and second components, the method comprising: transmitting a plurality of first components to said printer; and transmitting a plurality of second components to said printer; wherein the printer is configured to print data items by printing respective first and second components, and wherein second components are transmitted more frequently than said first components.

## Claims

1. Apparatus for printing a security code, the apparatus comprising:
means for generating a first component of said security code by encryption;
means for generating a second component of said security code using a value of a machine generated code; and
means for printing said security code by printing said first and second components;
wherein the apparatus is configured to associate a common first component with a plurality of distinct second components to print a plurality of security codes.

2. Apparatus according to claim 1, wherein the machine generated code is a counter value or clock value stored by said apparatus.

3. Apparatus according to any preceding claim, wherein the apparatus is configured to:
generate a plurality of first components;
generate a plurality of second components;
wherein said second components are generated more frequently than said first components.

4. Apparatus according to any preceding claim, wherein the apparatus is configured to print said security code by printing said second component as a prefix or suffix to said first component.

5. Apparatus according to any preceding claim, wherein each of said plurality of security codes is unique.

6. Apparatus according to any preceding claim, wherein the apparatus is configured to provide each of said security codes to a repository.

7. Apparatus according to any preceding claim wherein the apparatus is further configured to store data indicating second components associated with a particular first component.

8. Apparatus according to any preceding claim, wherein the apparatus is configured to generate the first component of the security code by encrypting first data.

9. Apparatus according to claim 8, wherein the apparatus is configured to store data indicating second components associated with first data used to generate a particular first component.

10. Apparatus according to any preceding claim, wherein the apparatus is a printer and the means for printing said security code comprises a printhead.

11. Apparatus according to claim 10, wherein the apparatus is selected from the group consisting of a thermal transfer printer, an ink jet printer and a laser printer.

12. Apparatus according to anyone of claims 1 to 9, wherein the apparatus is an etching device.

13. A method for printing a security code comprising:
generating a first component of the security code at a printer by encryption;
generating a second component of the security code at the printer using a value of a machine generated code; and
printing the security code by printing said first and second components;
wherein a common first component is associated with a plurality of different second components to generate a plurality of security codes.

14. A method of validating data, said data being associated with a plurality of operations carried out by a predetermined system, the method comprising:
obtaining data from said predetermined system representing a number of operations carried out;
obtaining data from a database representing a number of operations carried out;
determining whether said data obtained from said predetermined system and said data obtained from said database satisfy a predetermined relationship.

15. A method of generating an image template defining a layout of print data, the image template including a first field associated with a security code, and a second field associated with a first data item, the second field being adapted to receive data to populate said second field with data to be printed in a printed image based upon said image template, the method comprising:
generating data stored in said image template representing an association between said first field and said second field.
